# EUROPEAN PATENT SPECIFICATION

(11) **EP 4 450 885 B1**
(45) Date of publication and mention of the grant of the patent: **04.03.2026**
(21) Application number: 22907358.0
(22) Date of filing: 08.12.2022
(51) Int. Cl.: F24F 11/41

(54) **VENTILATION DEVICE FOR A BUILDING**
BELÜFTUNGSVORRICHTUNG FÜR EIN GEBÄUDE
DISPOSITIF DE VENTILATION POUR UN BATIMENT

(30) Priority: 17.12.2021 JP 2021205605
(43) Date of publication of application: 23.10.2024
(73) Proprietor: Daikin Industries, Ltd., Osaka-shi, Osaka 530-0001 (JP)
(72) Inventor: TSURUZONO, Shota, Osaka-Shi, Osaka 530-0001 (JP); TAKAHASHI, Takashi, Osaka-Shi, Osaka 530-0001 (JP); ODO, Tsunahiro, Osaka-Shi, Osaka 530-0001 (JP); MATSUI, Nobuki, Osaka-Shi, Osaka 530-0001 (JP); YAMANOI, Yoshiki, Osaka-Shi, Osaka 530-0001 (JP); FUJITA, Naotoshi, Osaka-Shi, Osaka 530-0001 (JP); HANADA, Takuya, Osaka-Shi, Osaka 530-0001 (JP); IYOSHI, Yuta, Osaka-Shi, Osaka 530-0001 (JP); SAEKI, Kumiko, Osaka-Shi, Osaka 530-0001 (JP); MIYAZAKI, Takeru, Osaka-Shi, Osaka 530-0001 (JP); MAEDA, Toshiyuki, Osaka-Shi, Osaka 530-0001 (JP); OKAMOTO, Tetsuya, Osaka-Shi, Osaka 530-0001 (JP)
(74) Representative: Hoffmann Eitle
(86) International application number: PCT/JP2022/045331
(87) International publication number: WO 2023/112831

(56) References cited:
- EP-B1- 2 757 326
- WO-A1-2009/028184
- WO-A1-2010/082325
- WO-A1-2018/025369
- WO-A1-2018/073855
- WO-A1-2020/053929
- WO-A1-2020/235250
- JP-A- 2009 250 464
- JP-A- 2012 251 716
- JP-A- 2013 015 262
- JP-A- 2017 223 425
- JP-A- H07 332 817
- JP-A- S6 136 641
- US-A1- 2012 180 505

## Description

### Technical Field

The present invention relates to a ventilation apparatus for a building.

### Background Art

Conventionally, a ventilation air conditioning apparatus is known in which indoor ventilation is performed by an exhaust fan and an air supply fan, outside air that is heat exchanged with a refrigerant by a first heat exchanger is blown indoors, and indoor air that is heat exchanged with refrigerant by a second heat exchanger is discharged outdoors (see JP 2009 250528 A). In the ventilation air conditioning apparatus described in JP 2009 250528 A, when defrosting is performed, a technology for defrosting by switching the flow of refrigerant between the first heat exchanger and the second heat exchanger, is proposed. When the defrosting is performed, the heating operation is temporarily stopped.

WO 2020/235250 A1 relates to an air conditioner for a vehicle that includes a first inlet-side inside/outside air switching part, a first outlet-side outside/inside air switching part, a second inlet-side inside/outside air switching part and a second outlet-side inside/outside air switching part. In a dehumidifying heating mode, the first outlet-side inside/outside air switching part makes a switch to a ventilation path that guides air having passed through a first heat exchange part into a space to be air-conditioned, and the second inlet-side inside/outside air switching part makes a switch to a ventilation path that guides outside air to a second heat exchange part. In a defrosting mode, the second inlet-side inside/outside air switching part makes a switch to a ventilation path that guides inside air to the second heat exchange part, and a flow rate of refrigerant flowing through the second heat exchange part is reduced more than in the dehumidifying heating mode.

JP 2017 223425 A relates to a non-reversible heat pump system that includes a heat pump device, an outside air introduction fan, an exhaust fan, frost state detection units and a control unit. The heat pump device includes a compressor, an expansion section comprising an expansion valve, a first heat exchange section and a second heat exchange section. The compressor compresses the refrigerant and discharges it. The first heat exchange unit heats the object to be heated by exchanging heat between the refrigerant discharged from the compressor and the object to be heated. The expansion section expands the refrigerant flowing out from the first heat exchange section. The second heat exchange section evaporates the refrigerant by exchanging heat between the refrigerant expanded by the expansion section and air discharged from the indoors to the outdoors. The outside air intake fan introduces outside air into the second heat exchange section. The exhaust fan exhausts the air from the room to the outside. The frost state detection unit detects the state of frost adhering to the second heat exchange unit. The control unit controls the exhaust fan, the heat pump device, and the outside air introduction fan. When the control unit detects that the second heat exchange unit is frosted based on the frost state of the second heat exchange unit detected by the frost state detection unit, it increases the rotation speed of at least one of the exhaust fan and the outside air introduction fan. Moreover, the control unit is configured to increase the temperature of the refrigerant flowing into the second heat exchanger by increasing the opening degree of the expansion valve to be larger than a reference opening degree and by increasing the rotation speed of the compressor.

### Summary of Invention

### Technical Problem

In the ventilation air conditioning apparatus described in JP 2009 250528 A, when the ventilation air conditioning apparatus is temporarily stopped for defrosting, defrosting can be performed by radiating heat from the second heat exchanger by switching the operation, but it may take time.

The purpose of the present invention is to efficiently perform defrosting.

### Solution to Problem

The present invention provides a ventilation apparatus according to claim 1. Preferred embodiments are defined in the dependent claims.

The ventilation apparatus improves the defrosting efficiency of a second heat exchanger by controlling the state of the refrigerant in the refrigerant circuit so as to increase the temperature of the refrigerant flowing into the second heat exchanger while guiding the flow of air in an indoor space to the second heat exchanger.

In the above ventilation apparatus, the control unit outputs the predetermined instruction indicating to stop the compressor, when the second heat exchanger is determined to be in the frosted state.

According to the ventilation apparatus, the temperature of the refrigerant in the second heat exchanger can be increased by stopping the compressor, thereby improving the defrosting efficiency of the second heat exchanger.

In the above ventilation apparatus,
a plurality of the second heat exchangers are provided,
the refrigerant circuit further includes a first valve part configured to adjust an opening degree of a flow path connected to the second heat exchanger, for each of the second heat exchangers, and
when a predetermined second heat exchanger included among the plurality of the second heat exchangers is determined to be in the frosted state, the control unit outputs the predetermined instruction for closing the first valve part corresponding to the predetermined second heat exchanger.

According to the ventilation apparatus, the temperature of the refrigerant in the predetermined second heat exchanger can be increased by closing the first valve part, thereby improving the defrosting efficiency of the second heat exchanger.

According to the ventilation apparatus, the temperature of the refrigerant in the predetermined second heat exchanger corresponding to the first valve part can be increased by closing the first valve part, thereby improving the defrosting efficiency of the second heat exchanger.

In the above ventilation apparatus, when the plurality of the second heat exchangers are determined to be in the frosted state, the control unit outputs the predetermined instruction for closing, in a predetermined order, a plurality of the first valve parts corresponding to the plurality of the second heat exchangers determined to be in the frosted state.

According to the ventilation apparatus, by closing the first valve part in a predetermined order, the second heat exchangers are prevented from defrosting simultaneously, and the reduction of comfort can be prevented.

In the above ventilation apparatus,
the refrigerant circuit includes a second valve part configured to adjust an opening degree of a flow path, the second valve part being provided between the first heat exchanger and the second heat exchanger, and
when the second heat exchanger is determined to be in the frosted state while the second heat exchanger is functioning as an evaporator, the control unit outputs the predetermined instruction for increasing the opening degree adjusted by the second valve part as compared with before the second heat exchanger is determined to be in the frosted state.

According to the ventilation apparatus, by increasing the opening degree of the second valve part and closing the first valve part in a predetermined order, the second heat exchangers are prevented from defrosting simultaneously and the reduction of comfort can be prevented.

The above ventilation apparatus further includes:
a third valve part provided downstream from the second valve part in a flow of the refrigerant in the refrigerant circuit while the second valve part is functioning as an evaporator, and
when the second heat exchanger is determined to be in the frosted state while the second heat exchanger is functioning as an evaporator, the control unit further outputs the predetermined instruction for decreasing the opening degree adjusted by the third valve part as compared with before the second heat exchanger is determined to be in the frosted state.

According to the ventilation system, by reducing the opening degree of the third valve part, the temperature of the refrigerant flowing through the second heat exchanger upstream is increased to improve the defrosting efficiency of the second heat exchanger.

In the above ventilation apparatus,
the refrigerant circuit includes a bypass pipe configured to pass the refrigerant to the second heat exchanger from the compressor without involving the first heat exchanger, while the second heat exchanger is functioning as an evaporator, and
when the second heat exchanger is determined to be in the frosted state, the control unit outputs the predetermined instruction for causing the refrigerant compressed at the compressor to flow to the second heat exchanger via the bypass pipe.

According to the ventilation apparatus, by passing the refrigerant through the bypass pipe to the second heat exchanger, the temperature of the refrigerant flowing through the second heat exchanger is raised to improve the defrosting efficiency of the second heat exchanger.

In the above ventilation apparatus, to guide the flow of the air in the indoor space to the second heat exchanger, the control unit controls a first guide mechanism configured to switch between either guiding or not guiding air to the second heat exchanger from a ceiling space adjacent to and above the indoor space, or controls a second guide mechanism configured to switch between either guiding or not guiding air to the second heat exchanger from the indoor space.

According to the ventilation apparatus, by passing warm air to the second heat exchanger, the temperature of the refrigerant flowing through the second heat exchanger is increased to improve the defrosting efficiency of the second heat exchanger.

The above ventilation apparatus further includes:
a bypass guide mechanism configured guide air that has undergone heat exchange by the first heat exchanger to the second heat exchanger, and
when the second heat exchanger is determined to be in the frosted state and the air that has undergone heat exchange by the first heat exchanger is determined to have a temperature higher than a predetermined temperature, the control unit controls the bypass guide mechanism to guide the air that has undergone heat exchange to the second heat exchanger.

According to the ventilation apparatus, the temperature of the refrigerant flowing through the second heat exchanger is increased by passing warm air to the second heat exchanger through the bypass guide mechanism to improve the defrosting efficiency of the second heat exchanger.

In the above ventilation apparatus,
a plurality of the second heat exchangers are provided,
the second air flow path through which air taken in from the indoor space is exhausted to the outdoors is provided for each of the second heat exchangers, and
the control unit adjusts an air volume of air flowing through the second air flow path corresponding to the second heat exchanger based on a status of each of the plurality of the second heat exchangers.

According to the ventilation apparatus, by adjusting the air volume of air flowing in accordance with the status of each of the plurality of the second heat exchangers, it is possible to prevent the simultaneous defrosting of the second heat exchangers and to prevent the reduction of comfort.

In the above ventilation apparatus, when a degree of frosting of one of the plurality of the second heat exchangers is greater than a degree of frosting of another one of the plurality of the second heat exchangers, the control unit implements control such that a first air volume of the second air flow path corresponding to the one of the plurality of the second heat exchangers is increased as compared with a second air volume of the second air flow path corresponding to the other one of the plurality of the second heat exchangers.

According to the ventilation apparatus, the reduction in comfort can be prevented by defrosting the second heat exchanger according to the degree of frosting of the second heat exchanger.

In the above ventilation apparatus, when implementing control to increase the first air volume, the control unit implements control to decrease the second air volume as compared with before increasing the first air volume.

According to the ventilation apparatus, comfort can be maintained by preventing negative pressure in the indoor space.

In the above ventilation apparatus, the control unit outputs a signal to increase a temperature set with respect to an air conditioner provided in the indoor space, when the second heat exchanger is determined to be in the frosted state.

According to the ventilation apparatus, by raising the temperature set in the air conditioner, the temperature of the refrigerant flowing in the second heat exchanger is raised to improve the defrosting efficiency of the second heat exchanger.

The above ventilation apparatus further includes:
a switching mechanism configured to switch between whether to supply air from the indoor space or to supply air from the outdoors as air flowing through the second air flow path, and
the control unit controls the switching mechanism to supply air starting from air having a higher detected temperature between the air from the indoor space and the air from the outdoors.

According to the ventilation apparatus, by supplying air starting from air having a higher detected temperature to pass warm air to the second heat exchanger, the temperature of the refrigerant flowing through the second heat exchanger is raised to improve the defrosting efficiency of the second heat exchanger.

In the above ventilation apparatus, when the second heat exchanger is determined to be in the frosted state after receiving, from an air conditioner, a signal indicating that a defrosting operation is to be performed, the control unit prevents output of the predetermined instruction to the actuator configured to control the state of the refrigerant in the refrigerant circuit.

According to the ventilation apparatus, by preventing defrosting of the second heat exchanger, simultaneous defrosting of the air conditioner and the ventilation apparatus can be prevented to prevent the reduction in comfort.

In the above ventilation apparatus, when the signal indicating that the defrosting operation is to be performed is received from the air conditioner, the control unit further implements control to increase an air volume supplied to the indoor space from the first air flow path as compared with the air volume before receiving the signal indicating that the defrosting operation is to be performed from the air conditioner, and implements control to increase the air volume exhausted from the second air flow path to the outdoors as compared with the air volume before receiving the signal indicating that the defrosting operation is to be performed from the air conditioner.

According to the ventilation apparatus, by increasing the air volume, instead of the air conditioner, the heating capability of the ventilation apparatus can be improved and comfort can be maintained.

In the above ventilation apparatus, when the second heat exchanger is determined to be in the frosted state, the control unit further transmits, to an air conditioner, a signal indicating not to perform a defrosting operation.

According to the ventilation apparatus, by preventing defrosting of the air conditioner, simultaneous defrosting of the air conditioner and the ventilation apparatus can be prevented to prevent the reduction in comfort.

The present inventionas defined in claim 1 provides a ventilation apparatus including:
a compressor;
a first heat exchanger configured to function as a condenser or an evaporator;
a first air flow path indicating a flow path allowing to exhaust air taken in from outdoors to an indoor space after passing through the first heat exchanger;
a second heat exchanger configured to function as a condenser or an evaporator;
a second air flow path indicating a flow path allowing to exhaust air taken in from the indoor space to the outdoors after passing through the second heat exchanger;
a refrigerant circuit through which a refrigerant flows, the refrigerant circuit being connected to the compressor, the first heat exchanger, and the second heat exchanger by a refrigerant pipe; and
a control unit configured to output a predetermined instruction to cause the second heat exchanger to function as a condenser and to cause the first heat exchanger to function as an evaporator, to an actuator configured to control a state of the refrigerant in the refrigerant circuit to increase a temperature of the refrigerant flowing into the second heat exchanger, when the second heat exchanger is determined to be in a frosted state while the second heat exchanger is functioning as an evaporator.

According to the ventilation apparatus, the defrosting efficiency of the second heat exchanger is improved by making the second heat exchanger function as a condenser.

In the above ventilation apparatus, when the second heat exchanger is determined to be in the frosted state while the second heat exchanger is functioning as an evaporator, the control unit outputs the predetermined instruction and switches a flow of air in the first air flow path to be exhausted to the outdoors from the indoor space.

According to the ventilation apparatus, by switching the air flow in the first air flow path so as to exhaust the air to the outdoors, the temperature of the refrigerant flowing in the refrigerant circuit rises, thereby improving the defrosting efficiency of the second heat exchanger.

In the above ventilation apparatus, when the second heat exchanger is determined to be in the frosted state while the second heat exchanger is functioning as an evaporator, the control unit further switches a flow of air in the second air flow path to be supplied to the indoor space from the outdoors.

According to the ventilation apparatus, by supplying air from the outdoors to the indoor space, it is possible to prevent reduction in comfort by preventing negative pressure in the indoor space.

The above ventilation apparatus further includes:
a first casing configured to house the first heat exchanger and at least a part of the first air flow path; and
a second casing configured to house the second heat exchanger and at least a part of the second air flow path, wherein
the first casing and the second casing are separable.

According to the ventilation apparatus, the first casing and the second casing are separable, and, therefore, the arrangement layout can be facilitated, and the burden in installation can be reduced.

Ventilation methods are described in the following paragraphs of the disclosure to better understand the invention. These methods are not part of the scope of the present invention which is defined by the claims.

The present disclosure provides ventilation method using a plurality of ventilation apparatuses provided in a predetermined space, each of the ventilation apparatuses including:
a compressor;
a first heat exchanger configured to function as a condenser or an evaporator;
a first air flow path configured to supply air taken in from outdoors to an indoor space after passing through the first heat exchanger;
a second heat exchanger configured to function as a condenser or an evaporator;
a second air flow path configured to exhaust air taken in from the indoor space to the outdoors after passing through the second heat exchanger; and
a refrigerant circuit through which a refrigerant flows, the refrigerant circuit being connected to the compressor, the first heat exchanger, and the second heat exchanger by a refrigerant pipe, wherein
a control unit executes:
   acquiring a frosted state of the plurality of the second heat exchangers;
   generating a plurality of patterns for performing a defrosting operation for the plurality of the second heat exchangers when the plurality of the second heat exchangers are determined to be in the frosted state while the plurality of the second heat exchangers are functioning as an evaporator; and
   acquiring a status of the predetermined space and implementing control to defrost the second heat exchanger by using one of the generated plurality of patterns based on the frosted state and the status of the predetermined space.

According to the ventilation method, defrosting control can be performed in an appropriate pattern, thereby improving defrosting the efficiency of the second heat exchanger.

The present disclosure provides a ventilation method performed by a control unit that controls a ventilation apparatus, the ventilation apparatus including:
a compressor;
a first heat exchanger configured to function as a condenser or an evaporator;
a first air flow path configured to supply air taken in from outdoors to an indoor space after passing through the first heat exchanger;
a second heat exchanger configured to function as a condenser or an evaporator;
a second air flow path configured to exhaust air taken in from the indoor space to the outdoors after passing through the second heat exchanger; and
a refrigerant circuit through which a refrigerant flows, the refrigerant circuit being connected to the compressor, the first heat exchanger, and the second heat exchanger by a refrigerant pipe, wherein
the control unit executes:
   guiding a flow of air in the indoor space to the second heat exchanger when the second heat exchanger is determined to be in a frosted state to increase a temperature of the second heat exchanger; and
   outputting a predetermined instruction to an actuator configured to control a state of the refrigerant in the refrigerant circuit to increase a temperature of the refrigerant flowing into the second heat exchanger.

According to the ventilation method, the defrosting efficiency of the second heat exchanger is improved by controlling the state of the refrigerant in the refrigerant circuit so as to guide the air flow in the indoor space to the second heat exchanger and raise the temperature of the refrigerant flowing into the second heat exchanger.

### Brief Description of Drawings

[FIG. 1] FIG. 1 is a diagram illustrating a configuration example of a ventilation apparatus and an air conditioner according to the first embodiment.
[FIG. 2] FIG. 2 is a diagram illustrating a configuration example of a ventilation apparatus, an air conditioner, and an upper level control device according to the second embodiment.
[FIG. 3] FIG. 3 is a diagram illustrating a refrigerant circuit according to the second embodiment.
[FIG. 4] FIG. 4 is a sequence diagram illustrating a flow of processing performed between an upper level control device, a compressor unit, and an exhaust unit group when frosting occurs in each of the exhaust units in the exhaust unit group according to a modified example of the second embodiment.
[FIG. 5] FIG. 5 is a diagram illustrating a refrigerant circuit according to a modified example 1 of the third embodiment.
[FIG. 6] FIG. 6 is a diagram illustrating a refrigerant circuit according to a fourth embodiment.
[FIG. 7] FIG. 7 is a diagram illustrating a configuration example of a ventilation apparatus and an air conditioner according to a sixth embodiment.
[FIG. 8] FIG. 8 is a diagram illustrating a configuration example of a ventilation apparatus and an air conditioner according to a seventh embodiment.
[FIG. 9] FIG. 9 is a diagram illustrating a configuration example of a ventilation apparatus and an air conditioner according to an eighth embodiment.
[FIG. 10] FIG. 10 is a diagram illustrating an arrangement of a group of devices including an upper level control device according to a twelfth embodiment.
[FIG. 11] FIG. 11 is a flowchart illustrating a processing procedure performed by the upper level control device according to the thirteenth embodiment.

### Description of Embodiments

Hereinafter, the present embodiment will be described with reference to the drawings. Note that the following embodiments are essentially preferred examples and the embodiments are not intended to limit the scope of the present invention

### (First embodiment)

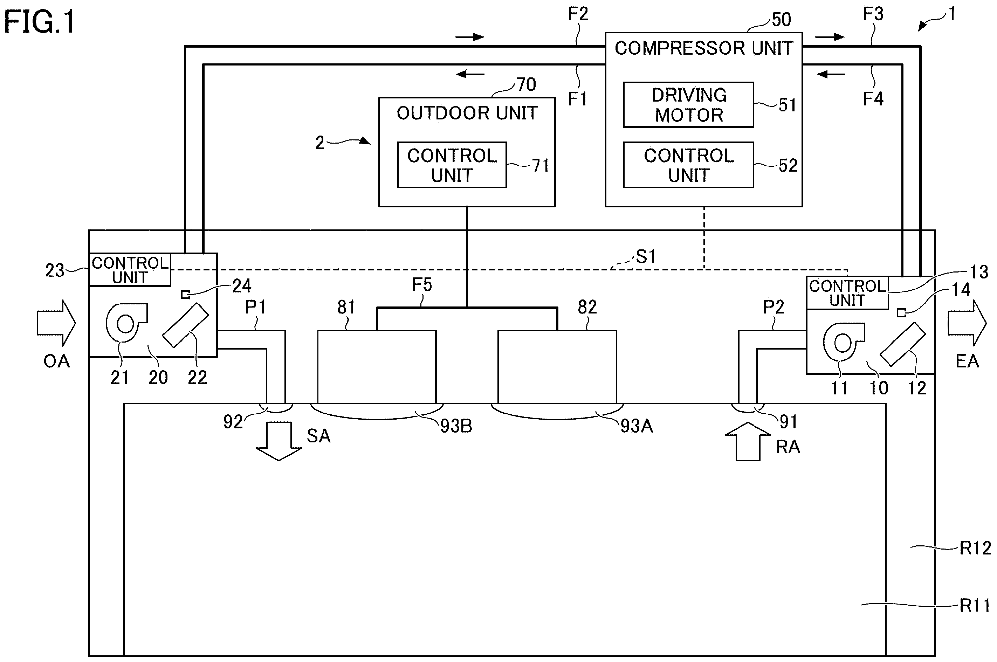

FIG. 1 is a diagram illustrating a configuration example of a ventilation apparatus and an air conditioner according to the first embodiment. In the example illustrated in FIG. 1, a ventilation apparatus 1 and an air conditioner 2 are provided for air conditioning an indoor space.

In the present embodiment, as an example of an indoor space, an example including a living room space R11 and a ceiling space R12 will be described. However, the indoor space is not limited to the living room space R11 and the ceiling space R12, and may be a space inside a building, for example, a space under the floor.

The living room space R11 is, for example, a living room inside an office or a house. The ceiling space R12 is an adjacent space above the living room space R11. The ceiling space R12 exists above the living room space R11, and, therefore, warm air tends to be collected in the ceiling space R12.

The air conditioner 2 includes an outdoor unit 70 and two air-conditioning indoor units 81 and 82. In the present embodiment, the number of air-conditioning indoor units is not limited to two units, but may be one unit or three units or more.

The air conditioner 2 performs a vapor compression type refrigeration cycle to cool and heat the living room space R11. The air conditioner 2 according to the present embodiment can both cool and heat the living room space R11. However, the present embodiment is not limited to an air conditioner capable of both cooling and heating, and may be a device capable of only cooling, for example.

The space between the outdoor unit 70 and the two air-conditioning indoor units 81 and 82 is connected by a connection pipe F5. The connection pipe F5 includes a liquid refrigerant connection pipe and a gas refrigerant connection pipe (not illustrated). Accordingly, a refrigerant circuit in which a refrigerant circulates between the outdoor unit 70 and the two air-conditioning indoor units 81 and 82 is formed. When refrigerant circulates in the refrigerant circuit, a vapor compression type refrigeration cycle is performed in the air conditioner 2.

The outdoor unit 70 is arranged outdoors. The outdoor unit 70 is provided with a heat exchanger, and the air in which the heat is exchanged with the refrigerant flowing through the heat exchanger is discharged outdoors.

The air-conditioning indoor units 81 and 82 are provided with a heat exchanger, and the air-conditioning indoor units 81 and 82 exchange the heat in the air with the refrigerant flowing through the heat exchanger, and blow the heat exchanged air into the living room space R11. In the present embodiment, the air-conditioning indoor units 81 and 82 are ceiling-installed types installed on the ceiling of the living room space R11. In particular, the air-conditioning indoor units 81 and 82 of the present embodiment are ceiling-embedded type air-conditioning indoor units, and air in which heat has been exchanged is blown out from ventilation ports 93A and 93B. Although an example in which the ventilation ports 93A and 93B are provided on the ceiling will be described in the present embodiment, the positions at which the ventilation ports 93A and 93B are provided are not particularly limited. The air-conditioning indoor units 81 and 82 are not limited to the ceiling-embedded type, and may be a ceiling-suspended type. The air-conditioning indoor units 81 and 82 may be other than the ceiling installed type, such as a wall mounted type or a floor mounted type.

The ventilation apparatus 1 includes the exhaust unit 10, the air supply unit 20, a compressor unit 50, refrigerant circuits F1, F2, F3, and F4, an air supply flow path P1, and a return air flow path P2.

The ventilation apparatus 1 supplies the air taken in from outdoors to the living room space R11 and exhausts the air taken in from the indoor space (including the living room space R11) to the outdoors. Thus, the ventilation apparatus 1 implements the replacement of the air in the living room space R11.

Further, the ventilation apparatus 1 according to the present embodiment exchanges heat between the exhaust unit 10 and the air supply unit 20 to reduce the temperature difference between the temperature of the air taken in from the outdoors and the temperature of the living room space R11.

The air supply flow path P1 (an example of the first air flow path) is a flow path for supplying air taken in from the outdoors (outside air) to the living room space R11 from the ventilation port 92 after passing through the air supply unit 20 including the first heat exchanger 22. Although the present embodiment will describe an example in which the ventilation port 92 is provided on the ceiling, the position at which the ventilation port 92 is provided is not particularly limited.

The return air flow path P2 (an example of the second air flow path) is a flow path for exhausting air (return air) taken in from the ventilation port 91 of the living room space R11 to the outdoors after passing through the exhaust unit 10 including the second heat exchanger 12. Although the present embodiment will describe an example in which the ventilation port 91 is provided on the ceiling, the position at which the ventilation port 91 is provided is not particularly limited.

The refrigerant circuits F1, F2, F3, and F4 are circuits in which the compressor unit 50, the first heat exchanger 22 of the air supply unit 20, and the second heat exchanger 12 of the exhaust unit 10 are connected by refrigerant pipe, and the refrigerant flows in these refrigerant circuits.

The control unit 52 of the compressor unit 50, the control unit 23 of the air supply unit 20, and the control unit 13 of the exhaust unit 10 are connected by a signal line S1 indicated by a dotted line in FIG. 1. Thus, information can be transmitted and received between the control unit 52 of the compressor unit 50, the control unit 23 of the air supply unit 20, and the control unit 13 of the exhaust unit 10.

The compressor unit 50 is provided with a driving motor 51 and a control unit 52, and controls circulation of the refrigerant in the refrigerant circuits F1, F2, F3, and F4 by compressing any one of the refrigerants in the refrigerant circuits F1, F2, F3, and F4. For example, when the second heat exchanger 12 in the exhaust unit 10 functions as an evaporator, the compressor unit 50 compresses the refrigerant in the refrigerant circuit F2 to circulate the refrigerant in the refrigerant circuits F1, F2, F3, and F4.

The driving motor 51 is a motor for rotating (driving) the compressor for compressing the refrigerant.

The control unit 52 controls the configuration in the compressor unit 50. For example, the control unit 52 outputs an instruction for rotating (driving) the compressor to the driving motor 51.

The air supply unit 20 includes a fan 21, a first heat exchanger 22, a control unit 23, and a temperature detecting unit 24, and takes in the outside air (OA), and supplies air (SA) to the living room space R11.

The fan 21 functions to supply air (SA) to the living room space R11 from the outside air (OA) that is taken in.

The first heat exchanger 22 functions as a condenser or an evaporator.

The temperature detecting unit 24 detects the outdoor temperature, the surface temperature of the first heat exchanger 22 and the temperature of the refrigerant flowing through the first heat exchanger 22.

The control unit 23 controls the configuration inside the air supply unit 20. The control unit 23 performs various kinds of control according to the detection result by a temperature detecting unit 14. For example, the control unit 23 adjusts the function of the first heat exchanger 22 as a condenser or an evaporator according to the detection result obtained by the temperature detecting unit 24.

The exhaust unit 10 is provided with a fan 11, a second heat exchanger 12, a control unit 13, and a temperature detecting unit 14, takes in return air (RA) of the living room space R11, and exhausts (EA) the taken in air to the outdoors.

The fan 11 functions to exhaust (EA) the return air (RA) taken in from the living room space R11 to the outdoors.

The second heat exchanger 12 functions as a condenser or an evaporator.

The temperature detecting unit 14 detects the outside air temperature, the surface temperature of the second heat exchanger 12, and the temperature of the refrigerant flowing through the second heat exchanger 12. Further, the temperature detecting unit 14 may detect the temperature of air in the living room space R11 and the temperature of air in the ceiling space R12 through the sensor unit (not illustrated).

The control unit 13 controls the configuration of the inside of the exhaust unit 10. The control unit 13 performs various kinds of control according to the detection result obtained by the temperature detecting unit 14. For example, the control unit 13 adjusts the function of the second heat exchanger 12 as a condenser or an evaporator according to the detection result of the temperature detecting unit 14.

A process performed by the ventilation apparatus 1 when the air temperature is low will be described. When the air temperature is low, the ventilation apparatus 1 warms the outside air (OA) taken in from the outdoors in the air supply unit 20, then supplies the air (SA) to the living room space R11, and cools the return air (RA) taken in from the living room space R11 in the exhaust unit 10, then exhausts the air (EA) to the outdoors. That is, the first heat exchanger 22 in the air supply unit 20 functions as a condenser, and the second heat exchanger 12 in the exhaust unit 10 functions as an evaporator. As the second heat exchanger 12 functions as an evaporator, the temperature of the refrigerant flowing through the second heat exchanger 12 becomes low, and therefore there is a possibility that the second heat exchanger 12 frosts. Therefore, in the present embodiment, when it is determined that frosting has occurred in the second heat exchanger 12, a defrosting operation is performed.

Specifically, while the second heat exchanger 12 functions as an evaporator, the control unit 13 of the exhaust unit 10 determines whether a predetermined reference indicating a frosted state of the second heat exchanger 12 is satisfied from the detection result obtained by the temperature detecting unit 14. As a predetermined reference indicating a frosted state of the second heat exchanger 12, a state in which the temperature of the refrigerant passing through the second heat exchanger 12 remains below a predetermined value (e.g., 0 degrees) for a predetermined period of time (e.g., 10 minutes) may be considered. The present embodiment is not limited to the case where the temperature of the refrigerant is used to determine the frosted state, and the pressure of the refrigerant may be used to detect the frosted state. Other determination methods for determining the frosted state may be used. For example, the control unit 13 may detect that the surface temperature of the second heat exchanger 12 remains below a predetermined value (e.g., 0 degrees) for a certain period of time (e.g., 10 minutes). As another example, the control unit 13 may capture an image of the surface of the second heat exchanger 12 by an imaging apparatus, and make the determination based on how much the captured image data and the image data in regular state match each other. If it is possible to determine whether the second heat exchanger 12 is frosted, a method other than the above method may be used.

The control unit 13 of the exhaust unit 10 according to the present embodiment performs control for defrosting the second heat exchanger 12 when it is determined that the predetermined reference is satisfied. As control for defrosting, the control unit 13 controls to raise the temperature of the second heat exchanger 12 by guiding the air flow in the living room space R11 to the second heat exchanger 12. As a specific control, the rotation of the fan 11 of the exhaust unit 10 is maintained. As a result, the warm air in the living room space R11 can flow to the second heat exchanger 12.

Further, the control unit 13 of the exhaust unit 10 outputs an instruction (an example of a predetermined instruction) to stop the compressor in the compressor unit 50 to the driving motor 51 (an example of an actuator) of the compressor unit 50 through the control unit 52 of the compressor unit 50.

The driving motor 51 of the present embodiment stops the circulation of the refrigerant in the refrigerant circuits F1, F2, F3, and F4 by stopping the compressor based on the instruction.

As an example of the control for defrosting the second heat exchanger 12, the control unit 13 of the present embodiment stops the circulation of the refrigerant in the refrigerant circuits F1, F2, F3, and F4, and passes warm air in the living room space R11 to the second heat exchanger 12 to raise the temperature of the refrigerant flowing in the second heat exchanger to perform the defrosting.

In the defrosting of the conventional second heat exchanger, when the temperature of the outside air is low, the defrosting operation tends to be performed after the circulation of the refrigerant circuit is reversed. In the defrosting operation switched to the reverse cycle, the air supply to the indoor space is on the evaporator side, and, therefore, the temperature of the air supply is low, so it has been common to stop the air supply. In this case, the ventilation is insufficient. Further, in order to secure the air supply, it has been necessary to heat the air supply flow path with an auxiliary heater, etc., but the heat efficiency of the heating has been low.

Therefore, in the present embodiment, by stopping the circulation of the refrigerant circuits F1, F2, F3, and F4 and using warm air (heat) in the living room space R11 for defrosting the second heat exchanger 12, it is possible to perform defrosting with high heat efficiency.

### (Second embodiment)

In the above-described embodiment, an example in which one exhaust unit is provided has been described. However, the number of exhaust units to be defrosted is not limited to one, and a plurality of exhaust units may be provided. Therefore, in the second embodiment, a configuration in which a plurality of exhaust units are provided and each of the exhaust units can be defrosted will be described.

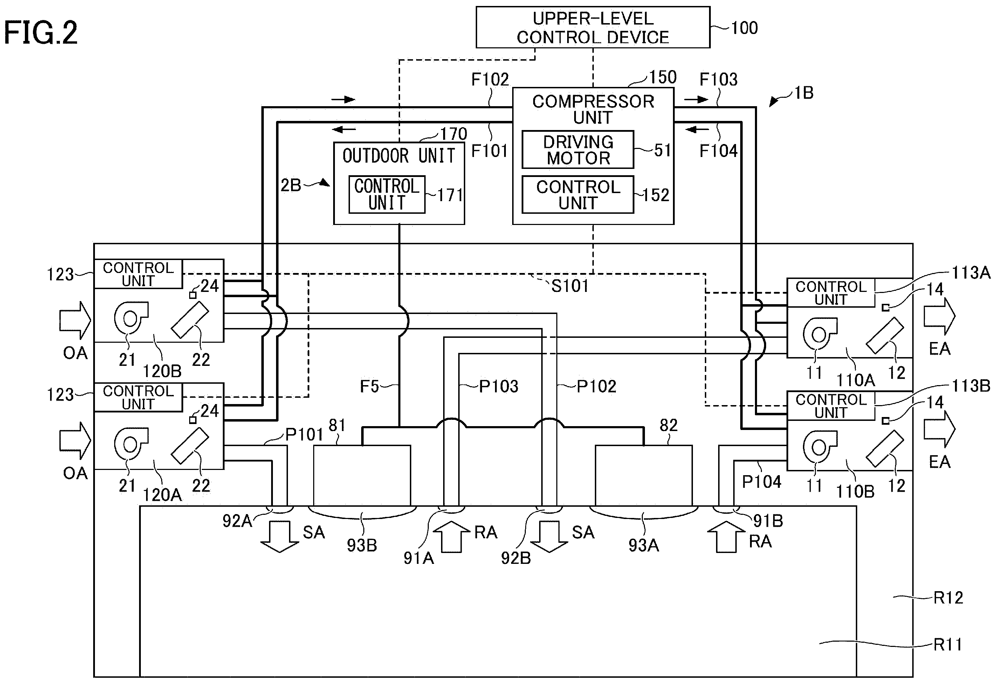

FIG. 2 is a diagram illustrating an example of a configuration of a ventilation apparatus, an air conditioner, and an upper level control device according to the second embodiment. In the present embodiment, the upper level control device provided in an upper level of the air conditioner and the ventilation apparatus performs control. Note that that the same reference numerals are assigned to the same configuration as in the above embodiment, and descriptions thereof will be omitted.

In the example illustrated in FIG. 2, an upper level control device 100 is provided for linking the ventilation apparatus 1B and the air conditioner 2B.

The air conditioner 2B includes an outdoor unit 170 and two air-conditioning indoor units 81 and 82. In the present embodiment, the number of air-conditioning indoor units is not limited to 2 units, but may be 1 unit or 3 units or more.

The outdoor unit 170 includes a control unit 171 together with a heat exchanger (not illustrated).

The control unit 171 controls the entire air conditioner 2B. The control unit 171 also transmits and receives information to and from the upper level control device 100. The control unit 171 performs various kinds of control in response to a control signal from the upper level control device 100.

The ventilation apparatus 1B includes a first exhaust unit 110A, a second exhaust unit 110B, a first air supply unit 120A, a second air supply unit 120B, a compressor unit 150, refrigerant circuits F101, F102, F103, the F104, a first air supply flow path P101, a second air supply flow path P102, a first exhaust flow path P103, and a second exhaust flow path P104.

The first air supply flow path P101 supplies air taken in from the outdoors through the first air supply unit 120A including the first heat exchanger 22 to the living room space R11 from the ventilation port 92A.

The second air supply flow path P102 supplies air taken in from the outdoors through the second air supply unit 120B including the first heat exchanger 22 to the living room space R11 from the ventilation port 92B.

The first exhaust flow path P103 exhausts air (return air) taken in from the ventilation port 91A of the indoor space to the outdoors upon passing the air through the first exhaust unit 110A including the second heat exchanger 12.

The second exhaust flow path P104 exhausts air (return air) taken in from the ventilation port 91B of the indoor space to the outdoors upon passing the air through the second exhaust unit 110B including the second heat exchanger 12.

The refrigerant circuits F101, F102, F103, the F104 are circuits that connect the compressor unit 150, the first heat exchanger 22 of the first air supply unit 120A and the second air supply unit 120B, and the second heat exchanger 12 of the first exhaust unit 110A and the second exhaust unit 110B by a refrigerant pipe to allow the refrigerant to flow therein.

The control unit 152 of the compressor unit 150, the control unit 123 of the first air supply unit 120A, the control unit 123 of the second air supply unit 120B, the control unit 113A of the first exhaust unit 110A, and the control unit 113B of the second exhaust unit 110B are connected by a signal line S101 indicated by a dotted line. Thus, information can be transmitted and received between the control unit 152, the two control units 123, the control unit 113A, and the control unit 113B.

The control unit 152 of the compressor unit 150 transmits the status of the ventilation apparatus 1B received from the two control units 123, the control unit 113A, and the control unit 113B to the upper level control device 100. As a result, the upper level control device 100 can implement control according to the status of the ventilation apparatus 1B.

The first air supply unit 120A is provided with a fan 21, a first heat exchanger 22, a control unit 123, and a temperature detecting unit 24, takes in outside air (OA), and supplies air (SA) from the ventilation port 92A to the living room space R11.

The second air supply unit 120B is provided with a fan 21, a first heat exchanger 22, a control unit 123, and a temperature detecting unit 24, takes in outside air (OA), and supplies air (SA) from the ventilation port 92B to the living room space R11.

The control unit 123 controls the configuration in each air supply unit. Further, the control unit 123 transmits the detection result obtained by the temperature detecting unit 24 or the like in each air supply unit to the control unit 152 of the compressor unit 150. The control unit 152 of the compressor unit 150 recognizes the current status from the detection result and transmits the recognition result to the upper level control device 100. Thus, the upper level control device 100 can recognize the status of the first air supply unit 120A and the second air supply unit 120B.

The first exhaust unit 110A is equipped with a fan 11, a second heat exchanger 12, a control unit 113A, and a temperature detecting unit 14, and takes in return air (RA) from the ventilation port 91A of the living room space R11 and exhausts air (EA) to the outdoors.

The second exhaust unit 110B is provided with a fan 11, a second heat exchanger 12, a control unit 113B, and a temperature detecting unit 14, and takes in return air (RA) from a ventilation port 91B of the living room space R11 and exhausts air (EA) to the outdoors.

The control unit 113A and the control unit 113B control the configuration in each exhaust unit. Further, the control unit 113A and the control unit 113B transmit the detection result obtained by the temperature detecting unit 14 or the like in each exhaust unit to the control unit 152 of the compressor unit 150. The control unit 152 of the compressor unit 150 recognizes the current status from the detection result and transmits the recognition result to the upper level control device 100. Thus, the upper level control device 100 can recognize the status of the first exhaust unit 110A and the second exhaust unit 110B.

The upper level control device 100 performs various kinds of control in order to link the operation of the ventilation apparatus 1B with the operation of the air conditioner 2B.

The upper level control device 100 receives the status of the air conditioner 2B from the control unit 171 of the outdoor unit 170, and receives the status of the ventilation apparatus 1B from the control unit 152 of the compressor unit 150. The upper level control device 100 performs various kinds of control according to the status of the air conditioner 2B and the status of the ventilation apparatus 1B.

When the upper level control device 100 recognizes that the second heat exchanger 12 of either the first exhaust unit 110A or the second exhaust unit 110B is frosted, the upper level control device 100 performs control to stop the circulation of refrigerant with respect to the frosted second heat exchanger 12. In the present embodiment, the circulation of refrigerant can be stopped for each second heat exchanger 12. The refrigerant circuit will now be described.

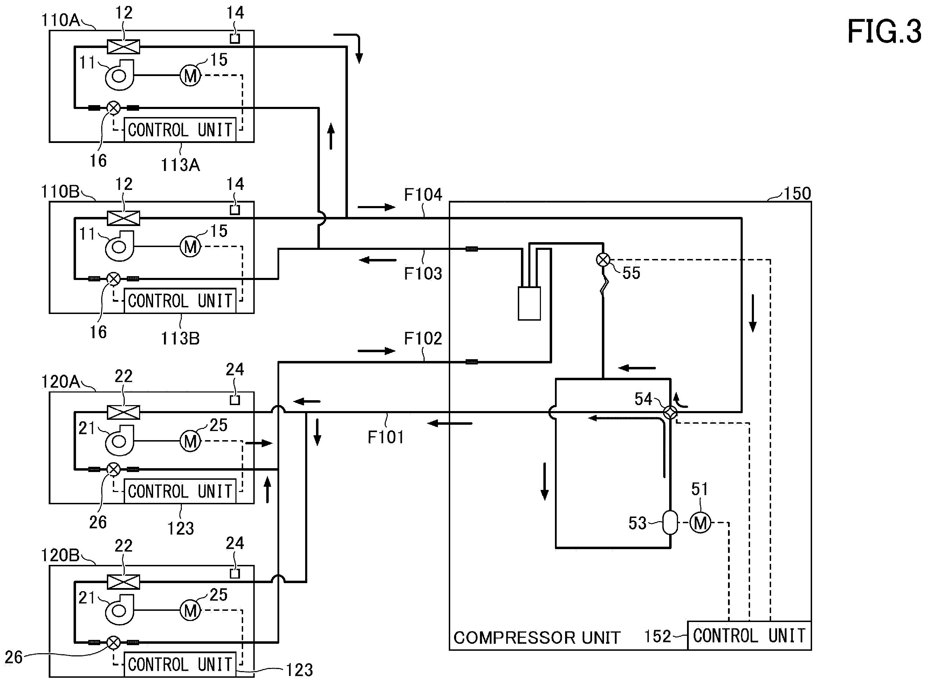

FIG. 3 is a diagram illustrating a refrigerant circuit according to the second embodiment. In the example illustrated in FIG. 3, a flow of refrigerant when the second heat exchanger 12 of the exhaust units 110A and 110B functions as an evaporator is illustrated. The same reference numerals are assigned to the configurations similar to that of the above-described embodiment, and the description thereof is omitted.

In the example illustrated in FIG. 3, air supply units 120A and 120B, exhaust units 110A and 110B, and a compressor unit 150 are provided.

The air supply units 120A and 120B include a fan 21, a first heat exchanger 22, a control unit 123, a temperature detecting unit 24, a driving motor 25, and an electric valve 26.

The driving motor 25 controls the air volume of the fan 21 by the control unit 123.

The electric valve 26 functions as an expansion valve for adjusting the opening degree of the flow path through which the refrigerant flows in order to reduce the pressure of the refrigerant, and switches whether to reduce the pressure based on the control unit 123. The electric valve 26 functions to reduce the pressure when the first heat exchanger 22 functions as an evaporator and not to reduce the pressure when the first heat exchanger 22 functions as a condenser. As illustrated in FIG. 3, the electric valve (expansion valve) 26 is provided in a flow path connected to the first heat exchanger 22 for each first heat exchanger.

The exhaust unit 110A includes a fan 11, a second heat exchanger 12, a control unit 113A, a temperature detecting unit 14, a driving motor 15, and an electric valve 16.

The exhaust unit 110B includes a fan 11, a second heat exchanger 12, a control unit 113B, a temperature detecting unit 14, a driving motor 15, and an electric valve 16.

The driving motor 15 controls the air volume of the fan 11 by the control unit 113A or the control unit 113B.

The electric valve 16 functions as an expansion valve for adjusting the opening degree of the flow path through which the refrigerant flows in order to reduce the pressure of the refrigerant, and switches whether to reduce the pressure based on control by the control unit 113A or the control unit 113B. The electric valve 16 functions to reduce the pressure when the second heat exchanger 12 functions as an evaporator and not to reduce the pressure when the second heat exchanger 12 functions as a condenser. As illustrated in FIG. 3, the electric valve (expansion valve) 16 is provided in a flow path connected to the second heat exchanger 12 for each second heat exchanger.

The compressor unit 150 is provided with a driving motor 51, a control unit 152, a compressor 53, a four-way valve 54, an electric valve 55, and a bypass electric valve 56.

The compressor 53 compresses the refrigerant flowing through the refrigerant circuit.

The driving motor 51 is an actuator for driving the compressor 53. The driving motor 51 according to the present embodiment drives the compressor 53 at a rotational speed controlled by the control unit 152.

The control unit 152 controls the configuration inside the compressor unit 150. For example, the control unit 152 controls the driving motor 51 and the four-way valve 54 as follows.

The four-way valve 54 functions as a valve for switching the outflow destination of the refrigerant compressed by the compressor 53 from the refrigerant circuit F101 and the refrigerant circuit F104. For example, when the second heat exchanger 12 functions as an evaporator based on the control of the control unit 152, the four-way valve 54 is switched so that the refrigerant compressed by the compressor 53 flows into the refrigerant circuit F101.

The electric valve 55 functions as a valve for controlling the opening and closing of the refrigerant circuit according to the control from the control unit 152. When the second heat exchanger 12 functions as an evaporator, the electric valve 55 is in a closed state in which no refrigerant flows.

The control units 113A and 113B output the detection result obtained by the temperature detecting unit 14 to the control unit 152 of the compressor unit 150.

The control unit 152 of the compressor unit 150 determines, from the input detection result, whether the second heat exchanger 12 satisfies a predetermined reference indicating frosting. The description of the predetermined reference is omitted as the predetermined reference is the same as in the first embodiment.

The control units 113A, 113B of the exhaust units 110A, 110B according to the present embodiment report, to the upper level control device 100, that the second heat exchanger 12 of the exhaust units 110A, 110B has frosted when it is determined that the predetermined reference has been satisfied. Thus, the upper level control device 100 can recognize the frosting of the second heat exchanger 12.

Then, as control for defrosting the second heat exchanger 12, the upper level control device 100 outputs a control signal (an example of a predetermined instruction) for closing the electric valve 16 (an example of the first valve part) existing upstream of the second heat exchanger 12, to the exhaust unit (the first exhaust unit 110A or the second exhaust unit 110B) including the frosted second heat exchanger 12.

The control unit (the control unit 113A or the control unit 113B) of the exhaust unit (the first exhaust unit 110A or the second exhaust unit 110B) receives a control signal for closing the electric valve 16 from the upper level control device 100 via the compressor unit 150. In this case, the control unit (the control unit 113A or the control unit 113B) of the exhaust unit (the first exhaust unit 110A or the second exhaust unit 110B) outputs a signal for closing the electric valve 16, to an actuator (not illustrated) for adjusting the opening of the electric valve 16 (an example of an actuator for controlling the state of the refrigerant in a refrigerant circuit), thereby controlling the electric valve 16 to be closed.

When the electric valve 16 is closed, the inflow of refrigerant into the second heat exchanger 12 located downstream of the electric valve 16 is prevented. As in the above embodiment, the rotation control of the fan 11 is maintained.

That is, in the present embodiment, as an example of the control for defrosting the frosted second heat exchanger 12 when there are a plurality of the second heat exchangers 12, the electric valve 16 upstream of the frosted second heat exchanger 12 is closed to stop the inflow of the refrigerant to the second heat exchanger 12, and warm air in the living room space R11 is allowed to flow through the second heat exchanger 12 to raise the temperature of the refrigerant flowing through the second heat exchanger, so that defrosting can be performed.

In the present embodiment, by using warm air (heat) in the living room space R11 for defrosting the second heat exchanger 12, defrosting with high heat efficiency can be performed.

### (Modified example 1 of the second embodiment)

In the above-described embodiment, an example of controlling the electric valve 16 corresponding to the second heat exchanger 12 to a closed state when the second heat exchanger 12 frosts has been described. Incidentally, if a plurality of the electric valves 16 are controlled to a closed state when a plurality of the second heat exchangers 12 become frosted, the air conditioning capability of the ventilation apparatus 1B decreases. Therefore, in the present modified example, an example will be described in which control is implemented such that defrosting is not performed simultaneously by a plurality of the second heat exchangers 12 when a plurality of the second heat exchangers 12 become frosted.

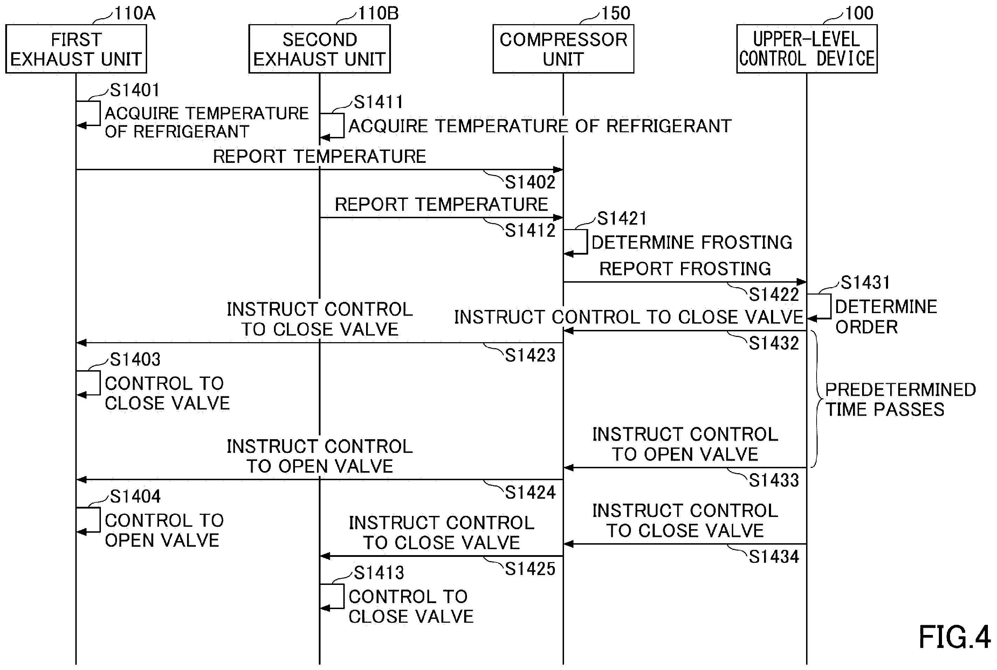

FIG. 4 is a sequence diagram illustrating the flow of processing performed between the upper level control device 100, the compressor unit 150, and the exhaust units 110A and 110B when frosting occurs in each of the exhaust units in the exhaust unit group according to the modified example 1 of the second embodiment.

First, the control unit 113A of the first exhaust unit 110A acquires the temperature of the refrigerant of the second heat exchanger 12 from the temperature detecting unit 14 (S1401).

Then, the control unit 113A reports the detected temperature of the refrigerant to the control unit 152 of the compressor unit 150 (S1402).

The control unit 113B of the second exhaust unit 110B acquires the temperature of the refrigerant of the second heat exchanger 12 from the temperature detecting unit 14 (S1411).

The control unit 113B reports the detected temperature of the refrigerant to the control unit 152 of the compressor unit 150 (S1412).

The control unit 152 of the compressor unit 150 determines whether the second heat exchanger 12 of the first exhaust unit 110A and the second exhaust unit 110B satisfies a predetermined reference indicating frosting, based on the detected temperature of the refrigerant received from the control unit 113A of the first exhaust unit 110A and the control unit 113B of the second exhaust unit 110B (S1421). In the example illustrated in FIG. 4, it is determined that each of the second heat exchangers 12 of the first exhaust unit 110A and the second exhaust unit 110B satisfies the predetermined reference. The predetermined reference is similar to that of the above-described embodiment, so the description thereof will be omitted.

The control unit 152 of the compressor unit 150 reports, to the upper level control device 100, the determination result indicating frosting (S1422).

The upper level control device 100 determines the order in which frosting avoidance is controlled for the first exhaust unit 110A and the second exhaust unit 110B based on the received determination result (S1431). Any method may be used to determine the order. For example, control may be implemented such that frosting avoidance is performed first for the exhaust unit that is more highly likely to frost, or frosting avoidance may be performed according to a priority order assigned in advance to the first exhaust unit 110A and the second exhaust unit 110B. The example illustrated in FIG. 4 is an example in which it is determined to perform the defrosting in the order of the first exhaust unit 110A and then the second exhaust unit 110B.

The upper level control device 100 transmits a signal indicating control to close the electric valve 16 of the first exhaust unit 110A to the control unit 152 of the compressor unit 150 (S1432).

The control unit 152 of the compressor unit 150 transmits a signal indicating an instruction for control to close the electric valve 16 to the control unit 113A of the first exhaust unit 110A (S1423).

Thus, the control unit 113A of the first exhaust unit 110A controls the electric valve 16 to be closed (S1403). Thus, the inflow of refrigerant into the second heat exchanger 12 of the first exhaust unit 110A is prevented.

After a predetermined time (for example, an appropriate time for the second heat exchanger 12 of the first exhaust unit 110A to complete defrosting) has passed, the upper level control device 100 transmits a signal indicating control to open the electric valve 16 of the first exhaust unit 110A to the control unit 152 of the compressor unit 150 (S1433).

Then, the control unit 152 of the compressor unit 150 transmits a signal indicating an instruction for control to open the electric valve 16 to the control unit 113A of the first exhaust unit 110A (S1424).

As a result, the control unit 113A of the first exhaust unit 110A implements control to open the electric valve 16 (S1404). As a result, the inflow of refrigerant into the second heat exchanger 12 of the first exhaust unit 110A is resumed.

The upper level control device 100 transmits a signal indicating an instruction for control to close the electric valve 16 of the second exhaust unit 110B to the control unit 152 of the compressor unit 150 (S1434).

The control unit 152 of the compressor unit 150 transmits a signal indicating an instruction for control to close the electric valve 16 to the control unit 113B of the second exhaust unit 110B (S1425).

Thus, the control unit 113B of the second exhaust unit 110B controls the electric valve 16 to be closed (S1413). Thus, the inflow of refrigerant into the second heat exchanger 12 of the second exhaust unit 110B is prevented.

Thus, when the plurality of second heat exchangers 12 are determined to be in a frosted state, the upper level control device 100 transmits a signal to close the plurality of electric valves 16 corresponding to the plurality of second heat exchangers determined to be in a frosted state according to a predetermined order.

Accordingly, when the control unit 152 and the upper level control device 100 of the compressor unit 150 according to the present embodiment determines that the predetermined reference is satisfied while the plurality of second heat exchangers 12 are functioning as evaporators, the defrosting of the second heat exchanger 12 can be implemented by preventing the inflow of the refrigerant to any one of the plurality of second heat exchangers 12 and maintaining the inflow of warm air from the living room space R11 by the fan 11.

Further, by defrosting each of the plurality of exhaust units according to the predetermined order, the present embodiment prevents the simultaneous defrosting of the second heat exchangers 12 of the plurality of exhaust units, thereby further preventing the decrease of the room temperature of the living room space R11.

### (Third embodiment)

Another method may be used for defrosting the second heat exchanger 12. Therefore, in the third embodiment, another aspect for adjusting the opening degree of the electric valve 16 inside the exhaust units 110A and 110B will be described. The configuration of the upper level control device 100, the air conditioner 2B, and the ventilation apparatus 1B according to the third embodiment will be the same as that of the second embodiment, and the description thereof will be omitted.

As illustrated in FIG. 3, when the second heat exchanger 12 functions as an evaporator, the electric valve 16 (an example of the second valve part) is provided between the first heat exchanger 22 and the second heat exchanger 12.

When the second heat exchanger 12 functions as an evaporator, the electric valve 16 functions as a valve part for reducing the pressure of a liquid high-pressure refrigerant flowing from the first heat exchanger 22 in order to make the refrigerant easy to evaporate according to the control of the control units 113A and 113B. As the opening degree of the electric valve 16 decreases, the pressure is reduced, and the temperature of the refrigerant decreases. That is, as the opening degree of the electric valve 16 increases, the temperature of the refrigerant increases.

While the second heat exchanger 12 is functioning as an evaporator, the upper level control device 100 recognizes that the second heat exchanger 12 is frosted from the determination result from the control unit 152 of the compressor unit 150. The determination by the control unit 152 of the compressor unit 150 is similar to the above-described embodiment and modified example, and descriptions thereof will be omitted.

The upper level control device 100 outputs a control signal for increasing the opening degree of the electric valve 16 to the exhaust unit (for example, the first exhaust unit 110A or the second exhaust unit 110B) including the second heat exchanger 12 which has been determined to be frosted, as compared with that before determination of frosting.

When the control signal is received, the control unit 113A of the first exhaust unit 110A or the 113B of the second exhaust unit 110B outputs a control signal (an example of a predetermined instruction) to an actuator (not illustrated) (an example of an actuator which controls the state of the refrigerant in a refrigerant circuit) which adjusts the opening degree of the electric valve 16 as compared with that before determination of frosting to increase the opening degree of the electric valve 16.

As a result, the temperature of the refrigerant flowing to the second heat exchanger 12 rises. Warm air flows into the second heat exchanger 12 from the living room space R11 by the fan 11. As a result, defrosting of the second heat exchanger 12 can be implemented.

### (Modified example 1 of the third embodiment)

The second heat exchanger 12 may be defrosted by using a method other than the above-described embodiment. Therefore, in the modified example 1 of the third embodiment, an example of adjusting the pressure of the refrigerant by an electric valve provided downstream of the exhaust unit will be described.

The configuration of the modified example 1 of the third embodiment is similar to that of the second embodiment described above except for the refrigerant circuit.

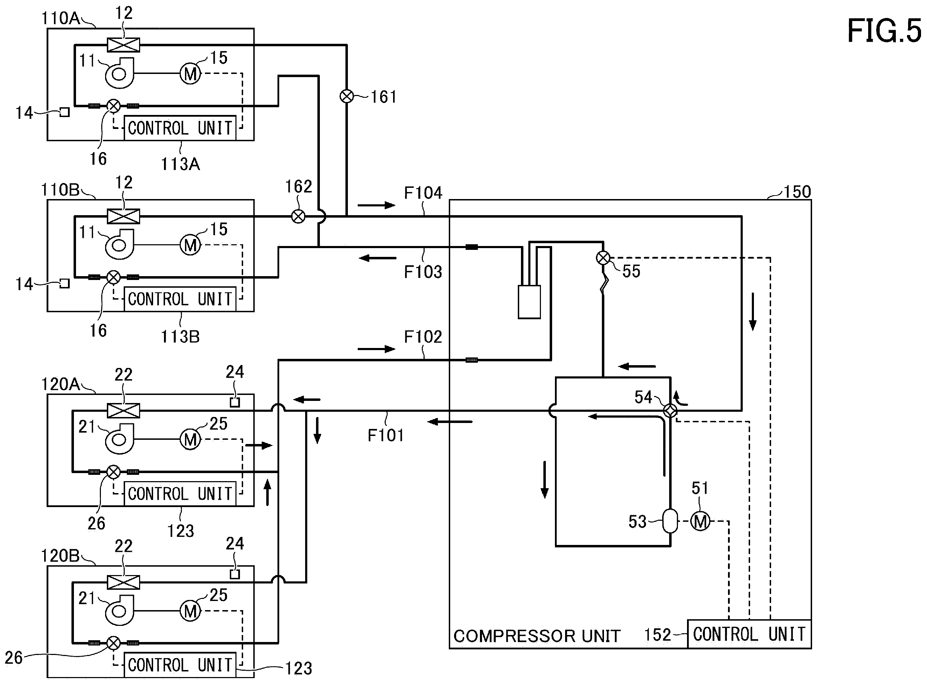

FIG. 5 is a diagram illustrating the refrigerant circuit of the modified example 1 of the third embodiment. The example illustrated in FIG. 5 illustrates the flow of refrigerant when the second heat exchanger 12 of the exhaust units 110A and 110B functions as an evaporator. Note that that the same reference numerals are assigned to the configuration similar to the above-described embodiment, and the description thereof will be omitted.

In the example illustrated in FIG. 5, when the second heat exchanger 12 of the exhaust units 110A and 110B functions as an evaporator, electric valves 161 and 162 (an example of the third valve part) are provided downstream from the second heat exchanger 12 of each of the exhaust units 110A and 110B.

The electric valves 161 and 162 are provided downstream of the refrigerant flowing through the second heat exchanger 12, and have a mechanism for adjusting the flow rate of the refrigerant.

While the second heat exchanger 12 is functioning as an evaporator, the control unit 152 of the compressor unit 150 according to the present modified example determines whether the predetermined reference indicating frosting of the second heat exchanger 12 is satisfied based on the temperature of the refrigerant flowing through the second heat exchanger 12. Note that that the predetermined reference is the same as that of the above-described embodiment, and the description thereof is omitted. The control unit 152 of the compressor unit 150 reports, to the upper level control device 100, the determination result.

In the present modified example, when the upper level control device 100 recognizes that there is a second heat exchanger 12 that satisfies the predetermined reference, the upper level control device 100 outputs a control signal (predetermined instruction) to make the opening degree of the electric valve (the electric valve 161 or the electric valve 162) smaller than before the predetermined reference is satisfied, to the control unit (the control unit 113A or the control unit 113B) of the exhaust unit (for example, the first exhaust unit 110A or the second exhaust unit 110B) that includes the second heat exchanger 12. Thus, the control unit (the control unit 113A or the control unit 113B) outputs a control signal (an example of a predetermined instruction) to an actuator (an example of an actuator for controlling the state of the refrigerant in a refrigerant circuit) for adjusting the opening degree of the electric valve (the electric valve 161 or the electric valve 162), thereby reducing the opening degree of the electric valve (the electric valve 161 or the electric valve 162).

Thus, in the present modified example, an electric valve for adjusting the flow rate of refrigerant is provided on the downstream side of the second heat exchanger 12 in addition to the electric valve 16 provided on the upstream side of the second heat exchanger 12.

By reducing the opening degree of the electric valve (the electric valve 161 or the electric valve 162), the pressure of refrigerant flowing through the second heat exchanger 12 located on the upstream side of the electric valve (the electric valve 161 or the electric valve 162) can be increased. As a result, the evaporation temperature of refrigerant flowing through the second heat exchanger 12 can be increased. Warm air in the living room space R11 continues to flow into the second heat exchanger 12 by the fan 11. Therefore, defrosting of the second heat exchanger 12 can be implemented.

### (Fourth embodiment)

A method other than the above-described embodiment may be used to defrost the second heat exchanger 12. In the fourth embodiment, an example in which a bypass flow path (an example of bypass pipe) is provided in the refrigerant circuit will be described. In the fourth embodiment, an exhaust unit 110B is reduced by one unit compared with the third embodiment, and two air supply units 120A and 120B and one exhaust unit 110A are provided. The other configurations are the same as those of the third embodiment and the description thereof will be omitted.

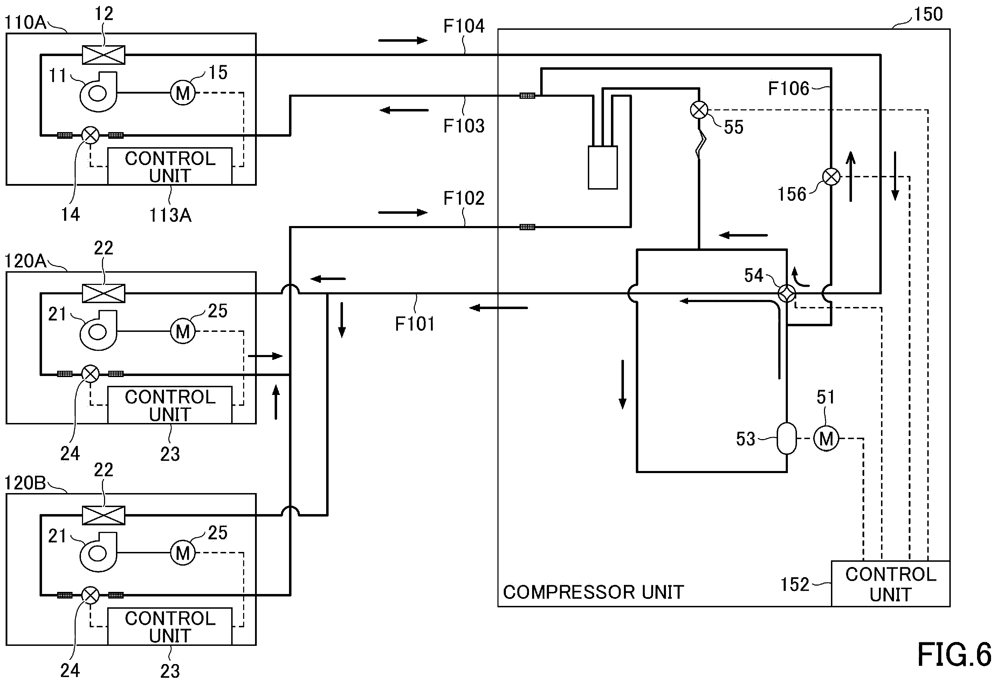

FIG. 6 is a diagram illustrating a refrigerant circuit according to the fourth embodiment. In the example illustrated in FIG. 6, a flow of refrigerant is illustrated when the second heat exchanger 12 of the first exhaust unit 110A functions as an evaporator. Note that that the same reference numerals are assigned to the configuration similar to the above-described embodiment, and the description thereof will be omitted.

In the example illustrated in FIG. 6, the air supply units 120A and 120B, the exhaust unit 110A, and the compressor unit 150 are provided.

The air supply units 120A and 120B are provided with a fan 21, a first heat exchanger 22, a control unit 23, a temperature detecting unit 24, a driving motor 25, and an electric valve 26.

The exhaust unit 110A is provided with a fan 11, a second heat exchanger 12, a control unit 113A, a temperature detecting unit 14, a driving motor 15, and an electric valve 16.

In the present modified example, while the second heat exchanger 12 functions as an evaporator, the control unit 113A of the exhaust unit 110A outputs the detection result (the temperature of the refrigerant flowing through the second heat exchanger 12) of the temperature detecting unit 14 to the control unit 152 of the compressor unit 150.

The control unit 152 of the compressor unit 150 determines whether the predetermined reference indicating frosting of the second heat exchanger 12 is satisfied based on the input temperature of the refrigerant flowing through the second heat exchanger 12. Note that the predetermined reference is the same as in the above-described embodiment so the description thereof is omitted. The control unit 152 of the compressor unit 150 reports, to the upper level control device 100, the determination result.

In the present modified example, when the upper level control device 100 recognizes the existence of the second heat exchanger 12 satisfying a predetermined standard, the upper level control device 100 outputs a control signal for passing the refrigerant into the bypass flow path F106 to the control unit 152 of the compressor unit 150 as defrosting control of the second heat exchanger 12.

The compressor unit 150 is provided with a driving motor 51, a control unit 152, a compressor 53, a four-way valve 54, an electric valve 55, and a bypass electric valve 156.

The control unit 152 controls the configuration of the inside of the compressor unit 150. For example, the control unit 152 controls the driving motor 51 and the four-way valve 54 described below.

In the present embodiment, when the second heat exchanger 12 functions as an evaporator, a bypass flow path F106 is provided to allow the refrigerant compressed by the compressor 53 to flow directly to the second heat exchanger 12 in order to raise the temperature of the refrigerant flowing through the second heat exchanger 12.

The bypass flow path F106 is provided as a flow path of refrigerant bypassing between the compressor 53 and the four-way valve 54 and the refrigerant circuit F103. That is, while the second heat exchanger 12 functions as an evaporator, the bypass flow path F106 functions as a pipe for passing refrigerant to the second heat exchanger 12 without going through the first heat exchanger 22.

The bypass electric valve 156 functions as a valve for switching whether or not to pass the refrigerant to the bypass flow path F106 in accordance with the control from the control unit 152.

Specifically, when the upper level control device 100 determines that the second heat exchanger 12 is frosted, the upper level control device 100 outputs a control signal for passing the refrigerant to the bypass flow path F106 to the control unit 152 of the compressor unit 150.

When the control signal for passing the refrigerant to the bypass flow path F106 is received from the upper level control device 100, the control unit 152 of the compressor unit 150 outputs a control signal (an example of a predetermined instruction) to an actuator (not illustrated) (an example of an actuator that controls the state of the refrigerant in the refrigerant circuit) that controls the opening degree of the bypass electric valve 156, thereby controlling the bypass electric valve 156 to be opened.

When the bypass electric valve 156 is opened, the refrigerant that has become a high-temperature and high-pressure gas by being compressed by the compressor 53 flows into the refrigerant circuit F103 through the bypass flow path F106. A part of the refrigerant that has become a high-temperature and high-pressure gas by passing through the bypass flow path F106 flows through the refrigerant circuit F103 without passing through the first heat exchanger 22. As a result, the temperature of the refrigerant flowing through the refrigerant circuit F103 rises. Accordingly, the refrigerant with the increased temperature flows through the second heat exchanger 12.

That is, in the present modified example, when the predetermined standard is satisfied, a part of the refrigerant that has become a high-temperature and high-pressure gas by the compressor 53 is controlled to flow through the bypass flow path F106 to the second heat exchanger 12. With this control, warm air in the living room space R11 flows to the second heat exchanger 12 by the fan 11. As a result, defrosting of the second heat exchanger 12 can be implemented.

### (Modified example 1 of the fourth embodiment)

The second heat exchanger 12 may be defrosted by using a method other than the above-described embodiment and modified example. In the modified example 1 of the fourth embodiment, an example in which a heater is provided in the refrigerant circuit will be described. The modified example 1 of the fourth embodiment is an example in which the bypass flow path F106 and the bypass electric valve 56 is removed as compared to the fourth embodiment, and instead, a heater is provided on the refrigerant circuit (for example, the refrigerant circuit F103). The other configurations are the same as those of the fourth embodiment and the description thereof will be omitted.

In the present modified example, while the second heat exchanger 12 functions as an evaporator, the control unit 113A of the exhaust unit 110A outputs the detection result of the temperature detecting unit 14 (the temperature of the refrigerant flowing through the second heat exchanger 12) to the control unit 152 of the compressor unit 150.

Based on the input temperature of the refrigerant flowing through the second heat exchanger 12, the control unit 152 of the compressor unit 150 determines whether the predetermined reference indicating frosting of the second heat exchanger 12 are satisfied. Note that that the predetermined reference is the same as that of the above-described embodiment, and the description thereof is omitted. The control unit 152 of the compressor unit 150 reports, to the upper level control device 100, the determination result.

In the present modified example, when the upper level control device 100 recognizes the existence of the second heat exchanger 12 that satisfies the predetermined reference, the upper level control device 100 instructs the control unit 152 of the compressor unit 150 to start heating the refrigerant circuit by the heater as defrosting control of the second heat exchanger 12.

When the control unit 152 of the compressor unit 150 receives an instruction to start heating from the upper level control device 100, the control unit 152 starts heating the heater.

As a result, the temperature of the refrigerant flowing through the refrigerant circuit F103 rises. Accordingly, the refrigerant with the increased temperature flows into the second heat exchanger 12. With this control, warm air in the living room space R11 flows into the second heat exchanger 12 by the fan 11. As a result, defrosting of the second heat exchanger 12 can be implemented.

### (Modified example 2 of the fourth embodiment)

The second heat exchanger 12 may be defrosted by using a method other than the above-described embodiment and modified example. In the modified example 2 of the fourth embodiment, an example of increasing the pressure of the refrigerant flowing through the refrigerant circuit will be described. The modified example 2 of the fourth embodiment will be an example including a configuration similar to that of the second embodiment. The other configurations are similar to those of the fourth embodiment and the description thereof will be omitted.

In the present modified example, while the second heat exchanger 12 is functioning as an evaporator, the control unit 113A of the exhaust unit 110A outputs the detection result of the temperature detecting unit 14 (the temperature of the refrigerant flowing through the second heat exchanger 12) to the control unit 152 of the compressor unit 150.

Based on the input temperature of the refrigerant flowing through the second heat exchanger 12, the control unit 152 of the compressor unit 150 determines whether the predetermined reference indicating frosting of the second heat exchanger 12 are satisfied. Note that that the predetermined reference is the same as that of the above-described embodiment, and the description thereof is omitted. The control unit 152 of the compressor unit 150 reports, to the upper level control device 100, the determination result.

In the present modified example, when the upper level control device 100 recognizes the existence of the second heat exchanger 12 that satisfies the predetermined reference, the upper level control device 100 instructs the control unit 152 of the compressor unit 150 to increase the pressure of the compressor as defrosting control of the second heat exchanger 12.

When the control unit 152 of the compressor unit 150 receives an instruction to increase the pressure from the upper level control device 100, the control unit 152 outputs a control signal to increase the pressure as compared with before the determination of frosting to the driving motor 51, thereby controlling to increase the pressure of the refrigerant flowing in the refrigerant circuit.

As a result, the pressure of the refrigerant flowing in the refrigerant circuit F103 increases, and the temperature of the refrigerant also increases. The refrigerant whose temperature has increased flows into the second heat exchanger 12, and warm air in the living room space R11 flows into the second heat exchanger 12 by the fan 11. Therefore, defrosting of the second heat exchanger 12 can be implemented.

### (Fifth embodiment)

A method other than the above-described embodiment may be used to defrost the second heat exchanger 12. In the fifth embodiment, an example of reverse cycling the flow of the refrigerant circuit will be described. In the fifth embodiment, the configuration is similar to the third embodiment, and the description will be omitted.

In the present embodiment, while the second heat exchanger 12 functions as an evaporator, the control unit 113A of the exhaust unit 110A outputs the detection result of the temperature detecting unit 14 (the temperature of the refrigerant flowing through the second heat exchanger 12) to the control unit 152 of the compressor unit 150.

Based on the input temperature of the refrigerant flowing through the second heat exchanger 12, the control unit 152 of the compressor unit 150 determines whether the predetermined reference indicating frosting of the second heat exchanger 12 is satisfied. Note that that the predetermined reference is the same as that of the above-described embodiment, and the description thereof is omitted. The control unit 152 of the compressor unit 150 reports, to the upper level control device 100, the determination result.

In the present embodiment, when the upper level control device 100 recognizes the existence of the second heat exchanger 12 that satisfies the predetermined reference, the upper level control device 100 instructs the control unit 152 of the compressor unit 150 to reverse cycle the flow of refrigerant as defrosting control of the second heat exchanger 12.

When the control unit 152 of the compressor unit 150 receives an instruction to reverse cycle the flow of refrigerant from the upper level control device 100, the control unit 152 outputs a control signal (an example of a predetermined instruction) to switch the flow of the four-way valve 54 to an actuator (not illustrated) (an example of an actuator that controls the state of the refrigerant in the refrigerant circuit) that drives the four-way valve 54 provided in the refrigerant circuit as illustrated in FIG. 3. As a result, the refrigerant compressed at the compressor is switched to flow to the exhaust units 110A and 110B. At this time, the opening degrees of the electric valves 16 and 26 are also adjusted.

The second heat exchanger 12 of the exhaust units 110A and 110B functions as a condenser when the compressed refrigerant flows in. On the other hand, the first heat exchanger 22 of the air supply units 120A and 120B functions as an evaporator.

The control described above causes the refrigerant flowing through the refrigerant circuit to reverse cycle, and the second heat exchanger 12 functions as a condenser, thereby increasing the temperature of the refrigerant flowing through the second heat exchanger 12. Warm air in the living room space R11 flows into the second heat exchanger 12 by the fan 11. As a result, defrosting of the second heat exchanger 12 can be implemented.

### (Modified example 1 of the fifth embodiment)

In the fifth embodiment, the flow of the refrigerant circuit is reverse cycled, but the air flow is not switched. Therefore, in the modified example 1 of the fifth embodiment, an example of reversing the cycle and switching the air flow will be described. The modified example 1 of the fifth embodiment has the same configuration as that of the fifth embodiment.

In the present modified example, when the upper level control device 100 recognizes the existence of the second heat exchanger 12 that satisfies the predetermined reference by the same procedure as that of the fifth embodiment, the upper level control device 100 instructs the control unit 152 of the compressor unit 150 to reverse cycle the flow of refrigerant, and outputs a control signal to the control unit 123 of the air supply units 120A and 120B to switch the flow of air by the fan 21 so as to exhaust the air from the living room space R11 to the outdoors via the first air supply flow path P101 and the second air supply flow path P102.

In the present modified example, warm air can flow into the first heat exchanger 22 functioning as an evaporator by the switching control of the air flow described above, and, therefore, the temperature of the refrigerant flowing through the refrigerant circuit can be increased. By increasing the temperature of the refrigerant flowing through the first heat exchanger 22 functioning as an evaporator, the temperature of the refrigerant flowing through the second heat exchanger 12 can also be increased. Therefore, the temperature of the refrigerant flowing through the second heat exchanger 12 can be further increased to improve the defrosting efficiency.

### (Modified example 2 of the fifth embodiment)

In modified example 1 of the fifth embodiment, an example of switching the air flow at the air supply units 120A and 120B has been described. However, in modified example 1 of the fifth embodiment, the air flow at the exhaust units 110A and 110B has been maintained under the same control as before frosting. Therefore, in modified example 2 of the fifth embodiment, an example in which the air flow at the exhaust units 110A and 110B is also switched will be described. Note that modified example 2 of the fifth embodiment has the same configuration as that of the fifth embodiment.

In the present modified example, when the upper level control device 100 recognizes the existence of the second heat exchanger 12 satisfying the predetermined reference by the same procedure as in the fifth embodiment, the upper level control device 100 instructs the control unit 152 of the compressor unit 150 to reverse cycle the flow of refrigerant, and outputs a control signal to the control unit 123 of the air supply units 120A and 120B to switch the flow of air by the fan 21 so as to exhaust the air from the living room space R11 to the outdoors via the first air supply flow path P101 and the second air supply flow path P102. The upper level control device 100 then outputs a control signal to the control unit 113A of the exhaust unit 110A and the control unit 113B of the exhaust unit 110B to switch the flow of air by the fan 11 so as to supply the air from the outdoors to the living room space R11 via the first exhaust flow path P103 and the second exhaust flow path P104.

In the present modified example, by the air flow switching control described above, warm air flows into the first heat exchanger 22 functioning as an evaporator, and the second heat exchanger 12 functioning as a condenser receives an inflow of air from the outdoors.

That is, in the present modified example, the refrigerant cycle and the air supply/exhaust are all switched, and, therefore, ventilation can be continued while heat exchange is performed, and the comfort of the living room space R11 can be maintained while defrosting the second heat exchanger 12.

### (Sixth embodiment)

A method other than those of the above-described embodiment may be used to defrost the second heat exchanger 12. In the sixth embodiment, an example of adjusting the air flow to the exhaust unit will be described.

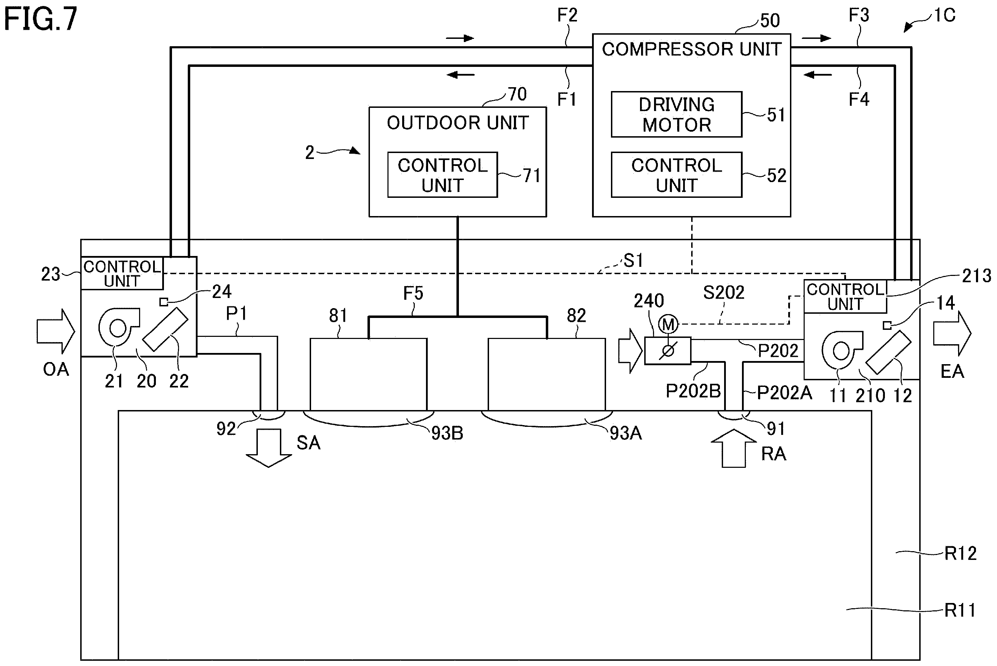

FIG. 7 is a diagram illustrating a configuration example of a ventilation apparatus and an air conditioner according to the sixth embodiment. In the example illustrated in FIG. 7, a ventilation apparatus 1C and an air conditioner 2 are provided for air conditioning an indoor space. The ventilation apparatus 1C includes an exhaust unit 210 and an air supply unit 20, which are controlled differently from the above-described embodiment. The same reference numerals are assigned to the configuration similar to the above-described embodiment, and the description thereof is omitted.

The return air flow path P202 (an example of the second air flow path) is a flow path for exhausting air (return air) taken in from the ventilation port 91 of the living room space R11 to the outdoors after passing through the exhaust unit 210 including the second heat exchanger 12.

In the return air flow path P202 according to the present embodiment, the air intake destination is branched into two in order to allow air to be taken in from a plurality of rooms. Each of the paths is referred to as a first return air branch path P202A (an example of the second air flow path) and a second return air branch path P202B (an example of the third air flow path).

The first return air branch path (an example of the second air flow path) P202A is an air flow path provided for exhausting air taken in from the living room space R11 to the outdoors after passing through the exhaust unit 210 including the second heat exchanger 12. The first return air branch path P202A takes in air from the ventilation port 91 provided in the ceiling of the living room space R11.

The second return air branch path (an example of the third air flow path) P202B is an air flow path provided for exhausting air taken in from the ceiling space R12 to the outdoors after passing through the exhaust unit 210 having the second heat exchanger 12. An example is described in which the space that is the air intake destination of the second return air branch path P202B according to the present embodiment is the ceiling space R12, which is a different space from that of the first return air branch path P202A. However, the space that is the air intake destination is not limited to the ceiling space R12, and may be an underfloor space. As described above, the air intake destination of the second return air branch path P202B may be a space different from the living room space R11.

An opening/closing damper 240 is provided at the tip of the second return air branch path P202B. The opening/closing damper 240 is usually closed. The opening/closing damper 240 (an example of the first guide mechanism) can adjust the air volume taken in from the ceiling space R12 by controlling from the control unit 213 provided in the exhaust unit 210 through the signal line S202.

The exhaust unit 210 includes a control unit 213 which performs processing different from the above-described embodiment.

The control unit 213 controls the configuration inside the exhaust unit 210. The control unit 213 performs various kinds of control according to the detection result obtained by the temperature detecting unit 14. For example, the control unit 213 adjusts the function of the second heat exchanger 12 as a condenser or evaporator according to the detection result obtained by the temperature detecting unit 14.

Further, the control unit 213 according to the present embodiment can adjust the air volume taken in from the ceiling space R12 by controlling the opening/closing damper 240 based on the detection result obtained by the temperature detecting unit 14.

In the present embodiment, while the second heat exchanger 12 is functioning as an evaporator, the control unit 213 of the exhaust unit 210 determines whether the predetermined reference indicating frosting of the second heat exchanger 12 is satisfied from the detection result obtained by the temperature detecting unit 14. Note that that the predetermined reference is the same as that of the above-described embodiment, and the description thereof is omitted.

The control unit 213 of the exhaust unit 210 according to the present embodiment detects the temperature of air in the ceiling space R12 when it is determined that the predetermined standard is satisfied. When it is determined that the temperature of air in the ceiling space R12 is higher than the temperature of air in the living room space R11, the control unit 213 implements control to open the opening/closing damper 240 so that the air present in the ceiling space R12 is guided to the second heat exchanger 12 through the second return air branch path P202B as defrosting control of the second heat exchanger 12. That is, warm air is gathered in the ceiling space R12 because the ceiling space R12 exists above the living room space R11. Therefore, when it is determined that the second heat exchanger 12 is frosted, the opening/closing damper 240 is controlled to open. By this control, the air, in which the warm air existing in the ceiling space R12 and the air existing in the living room space R11 are mixed, is guided to the second heat exchanger 12.

As an example of the control for increasing the temperature of the refrigerant flowing through the second heat exchanger 12, the control unit 213 according to the present embodiment implements control such that the warm air in the ceiling space R12 flows to the second heat exchanger 12. As a result, defrosting of the second heat exchanger 12 can be implemented. Note that that the output of the instruction to the actuator for controlling the state of the refrigerant in the refrigerant circuit so as to raise the temperature of the refrigerant flowing into the second heat exchanger 12 may be performed by any of the methods described in the above embodiment, and the description thereof will be omitted.

### (Modified example 1 of the sixth embodiment)

In the embodiment described above, an example in which warm air in the ceiling space R12 is mixed with air in the living room space R11 by using the opening/closing damper 240 and controlled to flow to the second heat exchanger 12 has been described. However, the sixth embodiment is not limited to a method in which warm air in the ceiling space R12 is mixed with air in the living room space R11. In the modified example 1 of the sixth embodiment, an example in which only warm air in the ceiling space R12 is controlled to flow to the second heat exchanger 12 will be described.

In the present modified example, as in the above-described embodiment, the return air flow path P202 branches into a first return air branch path P202A (an example of a second air flow path) and a second return air branch path P202B (an example of a third air flow path).

In the above-described embodiment, the opening/closing damper 240 is provided at the second return air branch path P202B, but in the present modified example, the opening/closing damper (an example of the second guide mechanism) is also provided at the first return air branch path P202A. Otherwise, the present modified example is the same as in the sixth embodiment.

The opening/closing damper provided at the first return air branch path P202A is usually opened. Thus, the return air (RA) of the living room space R11 can be taken in. The opening/closing damper provided at the first return air branch path P202A can adjust the air volume taken in from the living room space R11 by control via a signal line (not illustrated) from the control unit 213 provided in the exhaust unit 210.

The control unit 213 of the exhaust unit 210 according to the present modified example detects the temperature of the air in the ceiling space R12 when it is determined that the second heat exchanger 12 satisfies a predetermined reference for frosting. When it is determined that the temperature of the air in the ceiling space R12 is higher than the temperature of the air in the living room space R11, the control unit 213 controls to open the opening/closing damper 240 and to close the opening/closing damper provided at the first return air branch path P202A.

Thus, the intake of return air (RA) in the living room space R11 is prevented, and warm air existing in the ceiling space R12 flows into the second heat exchanger 12. Therefore, the defrosting efficiency of the second heat exchanger 12 can be improved.

### (Seventh embodiment)

A method other than the sixth embodiment described above may be used to adjust the air flow to the exhaust unit. Therefore, in the seventh embodiment, another aspect of adjusting the air flow to the exhaust unit will be described.

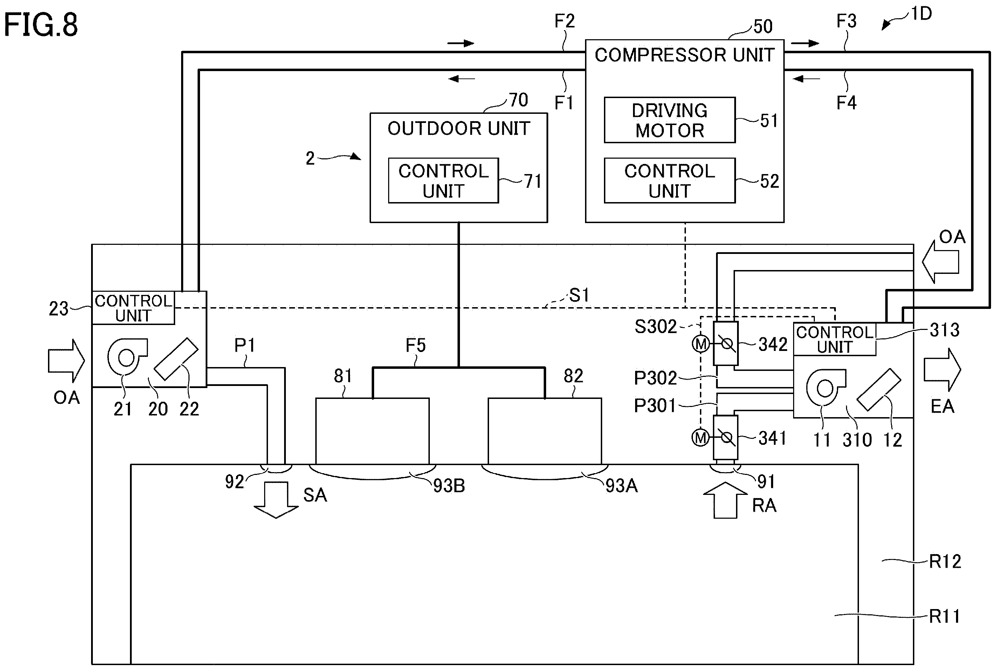

FIG. 8 is a diagram illustrating a configuration example of a ventilation apparatus and an air conditioner according to the seventh embodiment. In the example illustrated in FIG. 8, a ventilation apparatus 1D and an air conditioner 2 are provided for air conditioning an indoor space. The ventilation apparatus 1D has an exhaust unit 310 which performs control different from the above-described embodiment. The same reference numerals are assigned to the configuration similar to the above-described embodiment, and the description thereof is omitted.

The first return air flow path P301 (an example of the second air flow path) is a flow path for exhausting air (return air) taken in from the ventilation port 91 of the living room space R11 to the outdoors after passing through the exhaust unit 310 including the second heat exchanger 12.

A first opening/closing damper 341 (an example of a switching mechanism) is provided at the tip of the first return air flow path P301. The first opening/closing damper 341 is usually open. The first opening/closing damper 341 can adjust the air volume taken in from the living room space R11 by controlling from the control unit 313 provided in the exhaust unit 310 through the signal line S302.

The second return air flow path P302 is a flow path for exhausting the air taken in from the outdoors (return air) to the outdoors after passing through the exhaust unit 310 including the second heat exchanger 12.

A second opening/closing damper 342 (an example of a switching mechanism) is provided on the flow path of the second return air flow path P302 (an example of the second air flow path). The second opening/closing damper 342 is usually closed. The second opening/closing damper 342 can adjust the air volume taken in from the outdoors by controlling from the control unit 313 provided in the exhaust unit 310 through the signal line S202.

The first opening/closing damper 341 and the second opening/closing damper 342 function as a mechanism for switching whether air flowing to the second heat exchanger 12 is supplied from the living room space R11 or from the outdoors.

The exhaust unit 310 includes a control unit 313 for performing a process different from the above-described embodiment.

The control unit 313 controls the configuration inside the exhaust unit 310. The control unit 313 performs various kinds of control according to the detection result obtained by the temperature detecting unit 14. For example, the control unit 313 adjusts the function of the second heat exchanger 12 as a condenser or evaporator according to the detection result obtained by the temperature detecting unit 14.

Further, the control unit 313 according to the present embodiment controls the first opening/closing damper 341 and the second opening/closing damper 342 based on the detection result obtained by the temperature detecting unit 14, thereby changing the intake destination of air flowing into the second heat exchanger 12.

In the present embodiment, while the second heat exchanger 12 is functioning as an evaporator, the control unit 313 of the exhaust unit 310 determines whether the predetermined reference indicating frosting of the second heat exchanger 12 is satisfied from the detection result obtained by the temperature detecting unit 14. Note that that the predetermined reference is the same as that of the above-described embodiment, and the description thereof is omitted.

When the control unit 313 of the exhaust unit 310 according to the present embodiment determines that the predetermined reference is satisfied, the control unit 313 detects the temperature of the living room space R11 and the outside air. When the temperature of the air in the living room space R11 is higher than that of the outside air, the first opening/closing damper 341 and the second opening/closing damper 342 are not controlled.

When it is determined that the temperature of the outside air is higher than the temperature of the air in the living room space R11, the control unit 313 performs defrosting control of the second heat exchanger 12 to open the second opening/closing damper 342 so that the air existing in the outdoors is guided to the second heat exchanger 12 through the second return air flow path P302. Further, the control unit 313 performs closing control of the first opening/closing damper 341 to prevent the inflow of the air from the living room space R11 to the second heat exchanger 12 through the first return air flow path P301.

That is, the control unit 313 controls the first opening/closing damper 341 and the second opening/closing damper 342 to supply air starting from air having a higher detected temperature between the air from the living room space R11 and the air from the outdoors, when the second heat exchanger 12 frosts while the second heat exchanger 12 functions as an evaporator.

When it is possible to take in warm air from the outdoors, the control unit 313 controls the first opening/closing damper 341 and the second opening/closing damper 342 to take in air from the outdoors.

In the present embodiment, for example, when the control unit 313 determines that the air temperature TC > the air temperature TB > the air temperature TA > is satisfied by comparing the air temperature TA around the intake port of the first heat exchanger 22, the air temperature TB in the living room space R11, and the air temperature TC around the outlet of the second heat exchanger 12, the aforementioned processing is performed.

Examples in which the air temperature TC is higher than the air temperature TB and the air temperature TA includes when the outlet of the second heat exchanger 12 is located on the south side of the building and the surrounding air is warmed by sunlight, etc., when the inlet of the first heat exchanger 22 is located on the north side of the building and the surrounding air is cooled by the shade, when the snow that has not yet melted remains near the inlet of the first heat exchanger 22 in early spring and when the surrounding air is cold, and when the duct between the second heat exchanger 12 and the outlet is installed for a long time in the ceiling space R12 so that the air that has passed through the duct can be warmed by the heat of the ceiling space R12.

In this status, the control unit 313 implements control such that the warm outside air flows to the second heat exchanger 12. As a result, defrosting of the second heat exchanger 12 can be implemented. Note that that the output of the instruction to the actuator for controlling the state of the refrigerant in the refrigerant circuit so as to raise the temperature of the refrigerant flowing into the second heat exchanger 12, may be performed by any of the methods described in the above embodiments, and the description thereof will be omitted.

In the present embodiment, the temperature of the second heat exchanger 12 can be raised to further to improve the defrosting efficiency by allowing air having a higher detected temperature between the air from the living room space R11 and the air from the outdoors to flow into the second heat exchanger 12.

### (Eighth embodiment)

A method other than the above embodiments may be used to adjust the air flow to the exhaust unit. Accordingly, in the eighth embodiment, a method for providing a bypass flow path for directly passing air between the air supply unit and the exhaust unit will be described.

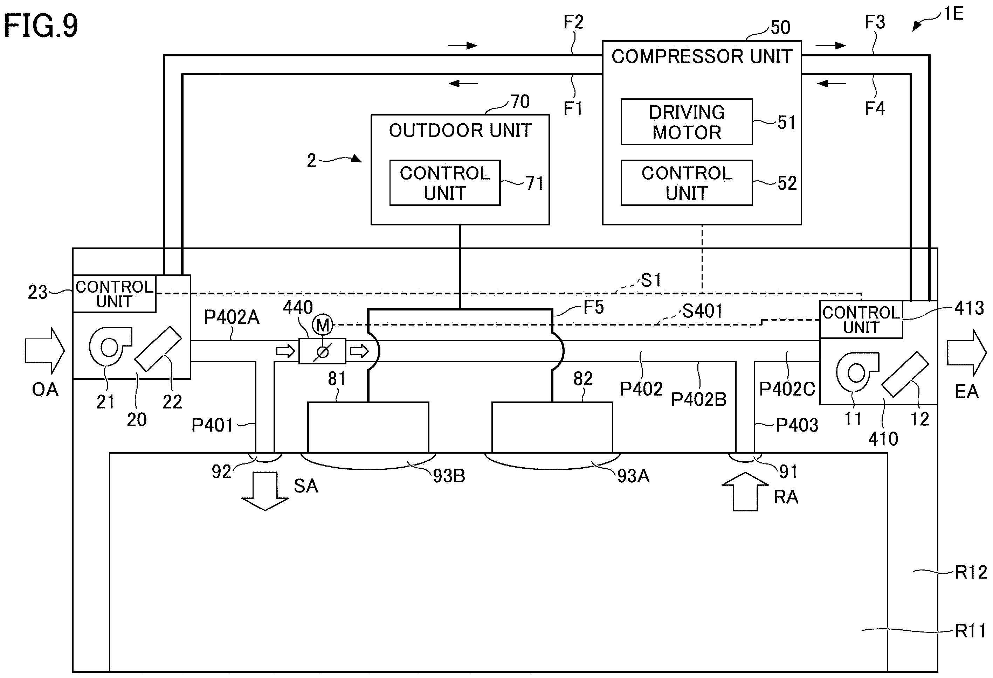

FIG. 9 is a diagram illustrating a configuration example of a ventilation apparatus and an air conditioner according to the eighth embodiment. In the example illustrated in FIG. 9, a ventilation apparatus 1E and an air conditioner 2 are provided for air conditioning an indoor space. In the third embodiment, the same reference numerals are assigned to the same configuration as in the above-described embodiment, and descriptions thereof will be omitted.

As illustrated in FIG. 9, a bypass flow path P402 is provided between the air supply unit 20 and the exhaust unit 410. The bypass flow path P402 includes a first bypass partial flow path P402A on the air supply unit 20 side from the air supply flow path P401, a third bypass partial flow path P402C on the exhaust unit 410 side from the return air flow path P403, and a second bypass partial flow path P402B connecting the first bypass partial flow path P402A and the third bypass partial flow path P402C.

An opening/closing damper 440 (an example of a bypass guide mechanism) is provided on the second bypass partial flow path P4102B. The opening/closing damper 440 is usually closed. The opening/closing damper 440 can guide the air warmed by the air supply unit 20 directly to the exhaust unit 410 by controlling from the control unit 413 provided in the exhaust unit 410 through the signal line S401.

After taking in outside air (OA), the air supply unit 20 usually supplies air (SA) to the living room space R11 through the first bypass partial flow path P402A and the air supply flow path P401.

The exhaust unit 410 includes a fan 11, a second heat exchanger 12, a control unit 413, and a temperature detecting unit 14, and takes in return air (RA) of the living room space R11 through the return air flow path P403 and the third bypass partial flow path P402C, and exhausts air (EA) to the outdoors.

While the second heat exchanger 12 functions as an evaporator, the control unit 413 of the exhaust unit 410 according to the present modified example detects whether a predetermined standard indicating frosting of the second heat exchanger 12 is satisfied. Note that that the predetermined reference is the same as that of the above-described embodiment, and the description thereof is omitted.

When the control unit 413 determines that the predetermined standard is satisfied, the control unit 413 further determines whether the temperature of the air after passing through the first heat exchanger 22 is higher than the predetermined temperature (may be a preset reference value or the temperature of the air in the living room space R11). The predetermined temperature is determined according to the embodiment. When it is determined that the temperature of the air after passing through the first heat exchanger 22 is higher than the predetermined temperature, the control unit 413 implements control to open the opening/closing damper 440.

Thus, when it is determined that the second heat exchanger 12 is frosted, and when it is determined that the temperature of the air that has undergone heat exchange by the first heat exchanger 22 is higher than the predetermined temperature, the control unit 413 according to the present modified example implements control to open the opening/closing damper 440. As a result, the air warmed in the exhaust unit 410 can flow directly to the second heat exchanger 12 through the bypass flow path P402, thereby improving the defrosting efficiency of the second heat exchanger 12. Note that that the output of the instruction to the actuator for controlling the state of the refrigerant in the refrigerant circuit so as to raise the temperature of the refrigerant flowing into the second heat exchanger 12 may be performed by any of the methods described in the above embodiment, and the description thereof will be omitted.

### (Ninth embodiment)

A method other than the above-described embodiment may be used to adjust the air flow to the exhaust unit. Therefore, in the ninth embodiment, the case of linking with the air conditioner 2B will be described.

In the present embodiment, as in the second embodiment, an example including the ventilation apparatus 1B, the air conditioner 2B and the upper level control device 100 will be used. The present embodiment has the same configuration as the second embodiment as illustrated in FIG. 2.

The control unit 113A and the control unit 113B control the configuration in the corresponding exhaust unit. Further, the control unit 113A and the control unit 113B transmit the detection result obtained by the temperature detecting unit 14 or the like in each exhaust unit to the control unit 152 of the compressor unit 150.

Based on the detection result, the control unit 152 of the compressor unit 150 determines whether the second heat exchanger 12 of the exhaust units 110A and 110B satisfies a predetermined reference indicating a frosted state.

The control unit 152 of the compressor unit 150 transmits the determination result, the recognition result to the upper level control device 100. Thus, the upper level control device 100 can recognize the status of the first exhaust unit 110A and the second exhaust unit 110B.

The upper level control device 100 performs various kinds of control in order to link the operation of the ventilation apparatus 1B with the operation of the air conditioner 2B.

For example, when the upper level control device 100 recognizes that at least one of the second heat exchangers 12 of the first exhaust unit 110A and the second exhaust unit 110B is frosted, the upper level control device 100 outputs a control signal to raise the temperature currently set in the air conditioner 2B, to the air conditioner 2B provided in the living room space R11.

The air conditioner 2B improves the heating capability according to the control signal. As a result, the temperature of the air in the living room space R11 rises. Therefore, the temperature of the air flowing into the second heat exchanger 12 can be raised. Therefore, the defrosting efficiency of the second heat exchanger 12 can be increased.

Further, when a plurality of air-conditioning indoor units exist, the upper level control device 100 may select an air-conditioning indoor unit that improves heating capability according to the arrangement of the air-conditioning indoor units. In the example illustrated in FIG. 2, the upper level control device 100 may improve the heating capability of the air-conditioning indoor unit 81 provided near the ventilation port 91A of the exhaust unit 110A when the second heat exchanger 12 of the exhaust unit 110A is frosted, and may improve the heating capability of the air-conditioning indoor unit 82 provided near the ventilation port 91B of the exhaust unit 110B when the second heat exchanger 12 of the exhaust unit 110B is frosted. Note that that the output of the instruction to the actuator for controlling the state of the refrigerant in the refrigerant circuit so as to raise the temperature of the refrigerant flowing into the second heat exchanger 12 may be performed by any of the methods described in the above embodiment, and the description thereof will be omitted.

That is, when the temperature of the refrigerant in the refrigerant circuit described in the above embodiment is controlled to rise, the comfort of the living room space R11 can be maintained by improving the heating capability of the air conditioner 2B even when the ability of the ventilation apparatus 1B to adjust the temperature decreases.

### (Tenth embodiment)

A method other than the above embodiment may be used to adjust the air flow to the exhaust unit.

In the present embodiment, as in the second embodiment, the example includes a ventilation apparatus 1B, an air conditioner 2B, and an upper level control device 100. The present embodiment has the same configuration as the second embodiment as illustrated in FIG. 2.

As in the above embodiment, the upper level control device 100 can recognize the status of the first exhaust unit 110A and the second exhaust unit 110B from the determination result from the control unit 152 of the compressor unit 150.

When the upper level control device 100 recognizes that at least one of the second heat exchangers 12 of the first exhaust unit 110A and the second exhaust unit 110B is frosted, the upper level control device 100 outputs a control signal for raising the air volume of the fan 11 to the exhaust unit (for example, the first exhaust unit 110A or the second exhaust unit 110B) including the frosted second heat exchanger 12.

Thus, in the present embodiment, the upper level control device 100 controls the fan 11 corresponding to the second heat exchanger 12 based on the respective statuses of the plurality of second heat exchangers 12 to adjust the air volume of air flowing to the second heat exchanger 12.

As a result, the air volume flowing into the second heat exchanger 12 that is frosted is raised, so that defrosting of the second heat exchanger 12 can be implemented. That is, in the present embodiment, the efficiency of heat exchange is increased by increasing the air volume on the exhaust heat recovery machine side, and a decrease in the temperature of the refrigerant flowing through the second heat exchanger 12 is prevented to implement defrosting.

In the present embodiment, even when there are multiple second heat exchangers 12, by adjusting the air volume flowing through the second heat exchanger 12 in accordance with each status of the second heat exchanger 12, defrosting can be achieved in accordance with the degree of defrosting of the second heat exchanger 12 while maintaining the comfort of the indoor space.

### (Modified example 1 of the tenth embodiment)

In the present modified example, an example will be described in which the control is different according to the degree of frosting of the plurality of second heat exchangers 12 when the plurality of second heat exchangers 12 are frosted. Note that that the modified example 1 of the tenth embodiment has the same configuration as the tenth embodiment.

When the upper level control device 100 of the present modified example recognizes that the second heat exchangers 12 are frosting, the upper level control device 100 acquires the frosting level of each of the second heat exchangers 12. The frosting level is, for example, a value at which the degree of frosting of the second heat exchanger 12 is set based on the determination result by the control unit 152 of the compressor unit 150, and is set according to the time after frosting and the current temperature of the refrigerant.

When it is determined that the frosting level (degree of frosting) of one of the second heat exchangers 12 is greater than that of the other second heat exchanger 12 among the plurality of second heat exchangers 12, the upper level control device 100 implements control to increase the air volume (an example of the first air volume) of the fan 11 corresponding to one of the second heat exchangers 12 compared with the air volume (an example of the second air volume) of the fan 11 corresponding to the other second heat exchanger 12.

Further, when the upper level control device 100 implements control to increase the air volume of the fan 11 corresponding to one of the second heat exchangers 12, the upper level control device 100 may control to decrease the air volume of the fan 11 corresponding to the other second heat exchanger 12 compared with before the control to increase the air volume. As a result, the total value of the air discharge amount is maintained, and, therefore, the negative pressure of the living room space R11 can be prevented.

After defrosting of one second heat exchanger 12 is completed, the upper level control device 100 implements control to increase the air volume of the fan 11 corresponding to the other second heat exchanger 12 and to decrease the air volume of the fan 11 corresponding to the one second heat exchanger 12.

In the present embodiment, the defrosting of for the second heat exchanger 12 with a high degree of frosting among the plurality of second heat exchangers 12 can be prioritized, so that the defrosting efficiency can be improved.

### (Modified example 2 of tenth embodiment)

Therefore, the case in which the air volume taken in from the outdoors by the air supply unit group is increased when the air volume exhausted from the exhaust unit group is increased will be described in the modified example 2. Note that that the modified example 2 of the tenth embodiment has the same configuration as the tenth embodiment.

As in the tenth embodiment, the control unit 152 of the compressor unit 150 of the present modified example determines whether the second heat exchanger 12 of the first exhaust unit 110A and the second exhaust unit 110B satisfies a predetermined reference indicating frosting based on the received outside air temperature.

When the control unit 152 of the compressor unit 150 determines that any one or more of the first exhaust unit 110A and the second exhaust unit 110B satisfies the predetermined reference, the upper level control device 100 instructs the exhaust unit to increase the air volume. The method of the instruction is the same as that of the tenth embodiment, and the description thereof is omitted.

The upper level control device 100 according to the present modified example instructs an increase in the air quantity (air volume) supplied to one or more of the first air supply unit 120A and the second air supply unit 120B instead of instructing a decrease in the air quantity as described in the modified example 1 of the tenth embodiment. The instruction of the increase is given from the upper level control device 100 to the control unit 123 of the first air supply unit 120A and the second air supply unit 120B through the control unit 152 of the compressor unit 150.

The target for instructing the increase of the air quantity (air volume) supplied may be any one of the first air supply unit 120A and the second air supply unit 120B, or may be each of the first air supply unit 120A and the second air supply unit 120B. However, the upper level control device 100 makes an adjustment such that the air volume discharged by the first exhaust unit 110A and the second exhaust unit 110B and the air volume taken in by the first air supply unit 120A and the second air supply unit 120B are the same.

In this way, when the control to increase the air volume flowing to the second heat exchanger 12 is performed on the fan 11 associated with any one of the plurality of second heat exchangers 12 included in the exhaust unit group, the upper level control device 100 according to the present modified example controls the fan 21 included in the air supply unit group to increase the air volume flowing to the first heat exchanger 22, compared with before the predetermined standard is satisfied, based on the increased air volume. As a result, in the present modified example, the air volume taken in and the air volume exhausted are approximately the same, and, therefore, it is possible to prevent negative pressure in the living room space R11.

### (Eleventh embodiment)

The linking between the air conditioner and the ventilation apparatus is not limited to the control described above. Therefore, in the eleventh embodiment, a case where the air conditioner starts a defrosting operation will be described. Note that that the configuration of the eleventh embodiment is similar to that of the second embodiment.

The upper level control device 100 receives the status of the air conditioner 2B from the control unit 171 of the outdoor unit 170 and receives the status of the ventilation apparatus 1B from the control unit 152 of the compressor unit 150. The upper level control device 100 performs various kinds of control according to the status of the air conditioner 2B and the status of the ventilation apparatus 1B.

For example, when the upper level control device 100 recognizes that the air conditioner 2B is performing the defrosting operation based on the information received from the control unit 171 of the outdoor unit 170, the upper level control device 100 performs control to improve the heating capability of the ventilation apparatus 1B.

That is, when the air conditioner 2B performs a defrosting operation, the air conditioner 2B does not function as a heater, and the temperature in the living room space R11 may decrease. On the other hand, when the air supply temperature of the first air supply unit 120A and the second air supply unit 120B is increased to compensate for the degrading of the function of the air conditioner 2B when the air conditioner 2B performs a defrosting operation, the temperature of the refrigerant flowing to the second heat exchanger 12 of the first exhaust unit 110A and the second exhaust unit 110B connected by the refrigerant circuits F101, F102, F103, and F104 decreases. In this case, the possibility of frosting of the second heat exchanger 12 of the first exhaust unit 110A and the second exhaust unit 110B increases.

Therefore, when the upper level control device 100 receives a signal indicating that defrosting operation is being performed from the air conditioner 2B, the upper level control device controls the air supply units 120A and 120B to increase the air volume due to the air supply from the first air supply flow path P101 and the second air supply flow path P102 to the living room space R11 as compared with that before receiving a signal indicating that a defrosting operation will be performed from the air conditioner 2B, and controls the exhaust units 110A and 110B to increase the air volume due to the air exhaust from the first exhaust flow path P103 and the second exhaust flow path P104 to the outdoors as compared with that before receiving a signal indicating that defrosting operation will be performed from the air conditioner 2B.

In the present embodiment, when the air conditioner 2B is performing a defrosting operation, the upper level control device 100 increases the air volume of the air supply and exhausted air of the ventilation apparatus 1B without increasing the air supply temperature with respect to the ventilation apparatus 1B, thereby improving the heating capability and preventing the decrease of the temperature in the living room space R11.

### (Twelfth embodiment)

In the above-described embodiment, an example in which the upper level control device 100 controls one compressor unit 150 has been described. However, the number of compressor units controlled by the upper level control device 100 is not limited to one. Accordingly, in the twelfth embodiment, an example in which the upper level control device 100 controls a plurality of ventilation apparatuses and a plurality of air conditioners will be described.

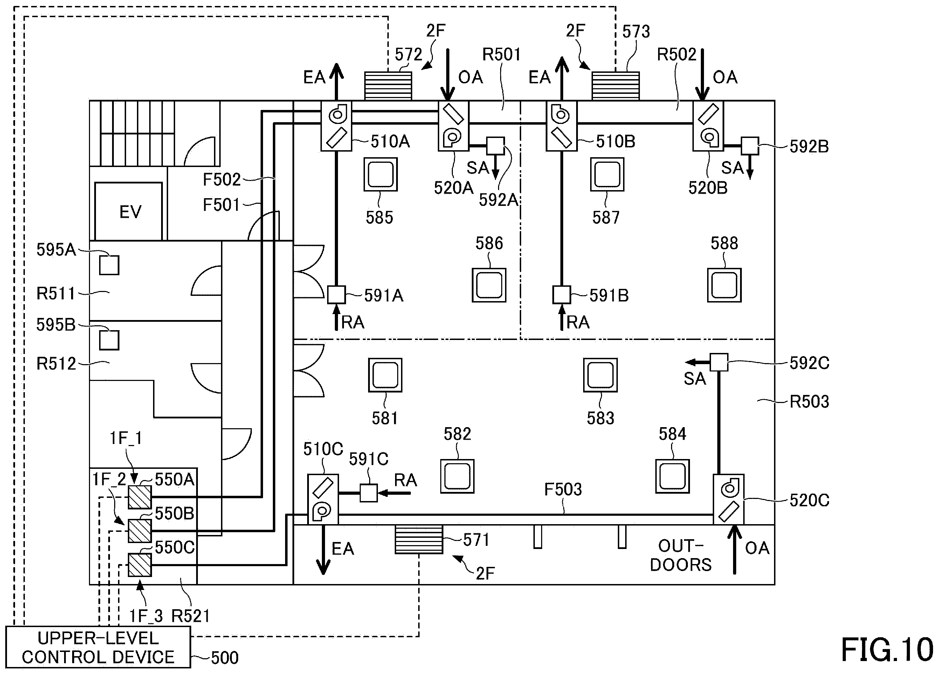

FIG. 10 is a diagram illustrating an arrangement of a group of devices including the upper level control device 500 according to the twelfth embodiment. The example illustrated in FIG. 10 includes at least living room spaces R501, R502, R503, lavatory rooms R511, R512, and a pipe shaft R521.

The lavatory rooms R511, R512 are provided with ventilation ports 595A, 595B, respectively.

The air conditioner 2F includes three outdoor units 571, 572, and 573. The outdoor unit 571 is connected to the four air-conditioning indoor units 581, 582, 583, and 584 by a connection pipe (not illustrated). The outdoor unit 572 is connected to the two air-conditioning indoor units 585 and 586 by a connection pipe (not illustrated). The outdoor unit 573 is connected to two air-conditioning indoor units 587 and 588 by a connection pipe (not illustrated).

The three outdoor units 571 to 573 are connected to the upper level control device 500 by a signal line. Thus, the three outdoor units 571 to 573 can perform air conditioning control according to the control of the upper level control device 500.

The first ventilation apparatus 1F_1 is a ventilation apparatus provided in the living room space R501 and includes a first compressor unit 550A, a first air supply unit 520A, and a first exhaust unit 510A.

The first air supply unit 520A supplies air (SA) from the ventilation port 592A. The first exhaust unit 510A returns air (RA) from the ventilation port 591A. The first compressor unit 550A, the first air supply unit 520A, and the first exhaust unit 510A are connected by a connection pipe F501. The connection pipe F501 includes a plurality of refrigerant connection pipes. Thereby, the refrigerant can be circulated between the first compressor unit 550A, the first air supply unit 520A, and the first exhaust unit 510A.

The first compressor unit 550A, the first air supply unit 520A, and the first exhaust unit 510 A are connected by a signal line (not illustrated). This enables transmission and reception of information between the units. The configuration inside the first compressor unit 550A, the first air supply unit 520A, and the first exhaust unit 510A is the same as that of the compressor unit 150, the first air supply unit 120A, and the first exhaust unit 110A illustrated in FIG. 2, and the description thereof will be omitted.

The second ventilation apparatus 1F_2 is a ventilation apparatus provided in the living room space R502 and includes a second compressor unit 550B, a second air supply unit 520B, and a second exhaust unit 510B.

The second air supply unit 520B supplies air (SA) from the ventilation port 592B. The second exhaust unit 510B returns air (RA) from the ventilation port 591B. The second compressor unit 550B, the second air supply unit 520B, and the second exhaust unit 510B are connected by a connection pipe F502. The connection pipe F502 includes a plurality of refrigerant connection pipes. Thus, the refrigerant can be circulated between the second compressor unit 550B, the second air supply unit 520B, and the second exhaust unit 510B.

The second compressor unit 550B, the second air supply unit 520B, and the second exhaust unit 510B are connected by a signal line (not illustrated). This enables transmission and reception of information between the units. The configuration inside the second compressor unit 550B, the second air supply unit 520B, and the second exhaust unit 510B is the same as that of the compressor unit 150, the first air supply unit 120A, and the first exhaust unit 110A illustrated in FIG. 2, and descriptions thereof will be omitted.

The third ventilation apparatus 1F_3 is a ventilation apparatus provided in the living room space R503 and includes a third compressor unit 550C, a third air supply unit 520C, and a third exhaust unit 510C.

The third air supply unit 520C supplies air (SA) from the ventilation port 592C. The third exhaust unit 510C returns air (RA) from the ventilation port 591C. The third compressor unit 550C, the third air supply unit 520C, and the third exhaust unit 510C are connected by a connection pipe F503. The connection pipe F503 includes a plurality of refrigerant connection pipes. Thus, the refrigerant can be circulated between the third compressor unit 550C, the third air supply unit 520C, and the third exhaust unit 510C.

The third compressor unit 550C, the third air supply unit 520C, and the third exhaust unit 510C are connected by a signal line (not illustrated). This enables transmission and reception of information between the units. The configuration inside the third compressor unit 550C, the third air supply unit 520C, and the third exhaust unit 510C is the same as that of the compressor unit 150, the first air supply unit 120A, and the first exhaust unit 110A illustrated in FIG. 2, and the description thereof will be omitted.

As described above, the present embodiment includes a plurality of combinations of a compressor unit, an air supply unit, an exhaust unit, and a connection pipe. The first compressor unit 550A, the second compressor unit 550B, and the third compressor unit 550C are arranged on the pipe shaft R521.

The upper level control device 500 is connected to the first compressor unit 550A, the second compressor unit 550B, and the third compressor unit 550C by a signal line. Accordingly, the upper level control device 500 can recognize the state of each apparatus of the first ventilation apparatus 1F_1 to the third ventilation apparatus 1F_3 and control each apparatus.

According to the above configuration, while the second heat exchanger 12 of each of the first exhaust units 510A to the third exhaust unit 510C functions as an evaporator, the control unit (not illustrated) of the first compressor unit 550A to the third compressor unit 550C receives the temperature of the refrigerant flowing through the second heat exchanger 12 from each of the first exhaust units 510A to the third exhaust unit 510C.

Then, while the second heat exchanger 12 functions as an evaporator, the control unit of the first compressor unit 550A to the third compressor unit 550C of the present embodiment determines whether a predetermined reference indicating the frosting in the second heat exchanger 12 is satisfied based on the temperature of the refrigerant in the second heat exchanger 12. The predetermined reference is the same as in the above-described embodiment, and, therefore, the description thereof will be omitted.

When the upper level control device 500 determines that the predetermined standard is satisfied, the upper level control device 500 raises the room temperature of the air conditioner 2F corresponding to the region (same zone) where the exhaust unit including the frosted second heat exchanger 12 is provided.

For example, when it is determined that the frosted second heat exchanger 12 of the exhaust unit 510C is frosted, the set temperature of the air conditioner 2F provided in the same living room space R503 is raised. In particular, by raising the set temperature of the air-conditioning indoor unit 582 provided in the vicinity of the ventilation port 591C of the exhaust unit 510C, the defrosting efficiency of the second heat exchanger 12 of the exhaust unit 510C can be increased.

Further, the capability of the ventilation apparatus can be decreased corresponding to the increase in the capability of the air conditioner 2F. That is, because the temperature of the refrigerant passing through the exhaust unit of the air conditioner can be increased, rapid defrosting of the heat exchanger can be implemented. The method for increasing the temperature of the refrigerant passing through the exhaust unit of the ventilation apparatus is the same as the above embodiment, and the description thereof is omitted.

Further, the upper level control device 500 may use any of the methods described in the embodiment described above for outputting an instruction to the actuator for controlling the state of the refrigerant in the refrigerant circuit so as to raise the temperature of the refrigerant flowing into the second heat exchanger 12 of the exhaust unit 510C. For example, as illustrated in the fifth embodiment, the temperature of the refrigerant flowing into the second heat exchanger 12 may be raised by controlling the flow of the refrigerant circuit including the second heat exchanger 12 of the exhaust unit 510C to reverse cycle. Further, the temperature of the refrigerant flowing into the second heat exchanger 12 may be increased by controlling the flow of the refrigerant circuit including the second heat exchanger 12 of the exhaust unit 510C while maintaining the forward cycle.

For example, in the upper level control device 500 according to the present embodiment, as the defrosting of the second heat exchanger 12 of the exhaust unit 510C of the ventilation apparatus 1F_3, the air volume exhausted from the exhaust unit 510C may be controlled to be increased compared with that before the defrosting operation of the air conditioner 2F is started. In this case, the upper level control device 500 may perform control to decrease the air volume exhausted from the exhaust unit 510A of the ventilation apparatus 1F_1 and the air volume exhausted from the exhaust unit 510B of the ventilation apparatus 1F_2, which have different systems from the ventilation apparatus 1F_3. The control to increase the air volume and the control to decrease the air volume are the same as that in the above-described embodiment, and will not be described. The control can implement defrosting of the second heat exchanger 12 of the exhaust unit 510C and prevent negative pressure in the living room spaces R501, R502 and R503 by maintaining the air volume discharged.

In the present embodiment, the temperature of the air flowing to the second heat exchanger 12 is increased by increasing the temperature of the living room space, thereby increasing the defrosting efficiency.

In the present embodiment, when the defrosting operation of the ventilation apparatuses 1F_1 to 1F_3 is performed, the heating capability of the air conditioner provided in the same area as the ventilation apparatuses 1F_1 to 1F_3 is improved to compensate for the decrease in the heating capability of the ventilation apparatus, thereby maintaining comfort.

### (Modified example 1 of the twelfth embodiment)

In the modified example 1 of the twelfth embodiment, a case where the air conditioner 2F starts the defrosting operation will be described. In the embodiment described above, when the second heat exchanger 12 is determined to be in a frosted state, an example of outputting a predetermined instruction to the actuator that controls the state of the refrigerant in the refrigerant circuit has been described. On the other hand, in a modified example of the present embodiment, even when the frosted state is determined, the output of the predetermined instruction is prevented when a predetermined condition is satisfied.

After receiving a signal indicating that defrosting operation is to be performed from the air conditioner 2F, the upper level control device 500 receives a determination result that the second heat exchanger 12 is determined to be in the frosted state from the control units of the first compressor unit 550A to the third compressor unit 550C.

In this case, while the air conditioner 2F is performing the defrosting operation, the upper level control device 500 prevents output of a predetermined instruction to the actuator for controlling the state of the refrigerant in the refrigerant circuit in order to raise the temperature of the refrigerant flowing through the frosted second heat exchanger 12.

Further, while the air conditioner 2F is performing the defrosting operation, the upper level control device 500 may perform control for increasing the air volume of the fan 11 corresponding to the frosted second heat exchanger 12.

### (Modified example 2 of the twelfth embodiment)

As a further modified example, the upper level control device 500 may send an instruction to the compressor unit (for example, the compressor unit 550C) to reduce the flow rate of refrigerant to the second heat exchanger 12 determined to be likely to be frosted while the air conditioner 2F is performing a defrosting operation. In this way, the progress of frosting can be prevented. That is, by preventing the progress of frosting of the second heat exchanger 12, the simultaneous defrosting operation with the air conditioner 2F in which the defrosting operation is currently performed can be prevented.

As a result, the heating capability of the first heat exchanger 22 of the air supply unit (for example, the air supply unit 520C) can be prevented from being stopped, so that a minimum level of comfort can be maintained.

As the reference for determining the possibility of frosting, for example, the surface temperature of the second heat exchanger 12 and the temperature of the indoor air in the living room space (for example, the living room space R505) are measured, and the surface temperature of the second heat exchanger 12 is lower than the dew point temperature of the air, and the surface temperature of the second heat exchanger 12 is 0°C or less. As the temperature of the indoor air, for example, the temperature measured by a sensor provided near the ventilation port is used.

Further, the upper level control device 500 may monitor the frosted state of the second heat exchangers 12 of the plurality of exhaust units and the frosted state of the plurality of air conditioners 2F, and perform defrosting operations sequentially from the devices determined to be likely to be frosted, thereby shortening the time for defrosting operations of the plurality of devices at the same time or preventing defrosting operations of the plurality of devices at the same time.

### (Modified example 3 of twelfth embodiment)

Similar to the modified example 1 of twelfth embodiment, the upper level control device 500 of the modified example 3 of the twelfth embodiment receives a signal indicating that defrosting operation is to be performed from the air conditioner 2F, and then receives a determination result that the second heat exchanger 12 is determined to be in a frosted state from the control units of the first compressor unit 550A to the third compressor unit 550C.

In this case, while the air conditioner 2F is performing the defrosting operation, the upper level control device 500 prevents output of a predetermined instruction to the actuator for controlling the state of the refrigerant in the refrigerant circuit in order to raise the temperature of the refrigerant flowing through the frosted second heat exchanger 12.

Further, when the upper level control device 500 receives a signal from the air conditioner 2F to perform a defrosting operation, the upper level control device 500 controls the air supply unit (for example, the air supply unit 520C) to increase the air volume due to the air supply from the air supply flow path to the living room space (for example, the living room space R503) as compared with that before the air conditioner 2F performs defrosting operation, and controls the exhaust unit (for example, the exhaust unit 510C) to increase the air volume due to the exhaust air from the second air flow path to the outdoors as compared with that before the air conditioner 2F performs defrosting operation.

In the present modified example, the air volume of the air supply and the air volume of the exhaust air are maintained in total, and, therefore, it is possible to prevent negative pressure in the living room space. Further, by increasing the air volume of the ventilation apparatus, it is possible to prevent a decrease of the heating capability.

### (Modified example 4 of twelfth embodiment)

Further, control may be performed to prevent simultaneous defrosting of the air conditioner 2F and the ventilation apparatus.

When it is determined that the second heat exchanger 12 of the exhaust unit is frosted, the upper level control device 500 of the present modified example starts defrosting control of the second heat exchanger 12. The defrosting method may be any of the methods described in the above embodiment.

Further, when the defrosting control of the second heat exchanger 12 is started, the upper level control device 500 transmits a control signal to the air conditioner 2F instructing not to perform a defrosting operation.

In the present modified example, it is possible to prevent the air conditioner 2F and the ventilation apparatus from simultaneously performing the defrosting operation. By preventing the simultaneous defrosting, it is possible to prevent the degrading of the air conditioning capability.

### (Thirteenth embodiment)

Further, when a plurality of ventilation apparatuses are provided, when the second heat exchangers 12 of the plurality of ventilation apparatuses are frosted, defrosting control may be different according to the degree of frosting of the second heat exchangers 12 of the plurality of ventilation apparatuses.

In the present embodiment, an example in which the upper level control device 500 controls four ventilation apparatuses will be described. The number of the air conditioners 2F that the upper level control device 500 controls may be any number.

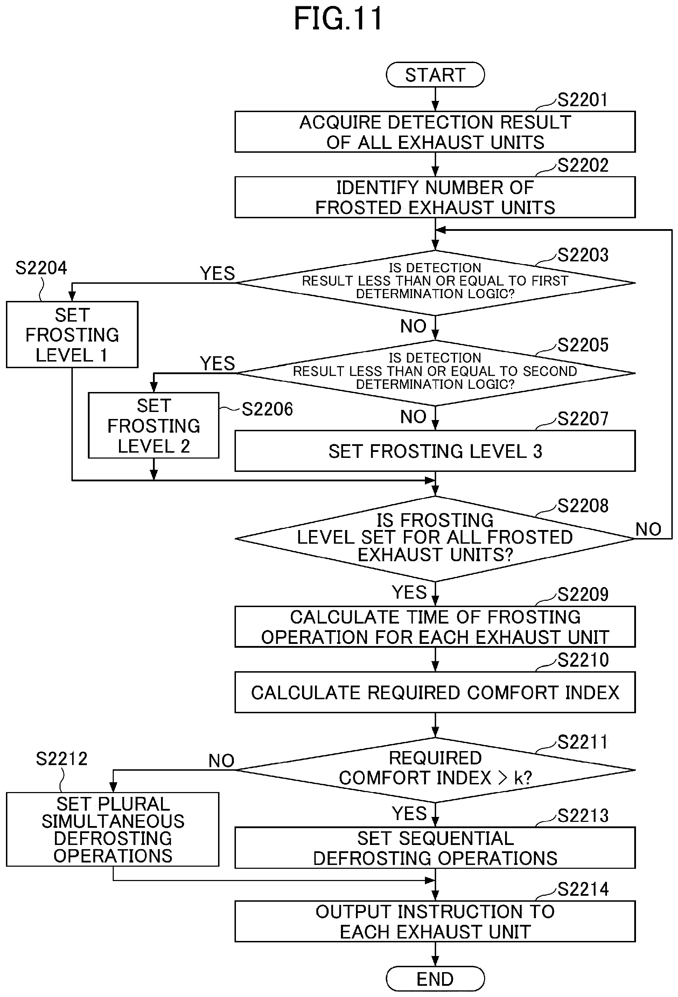

FIG. 11 is a flowchart illustrating a processing procedure performed by the upper level control device 500 according to the present embodiment. Although an example of processing performed by the upper level control device 500 will be described in the present embodiment, the processing is not limited to the upper level control device 500 and may be performed on a centralized management server provided at a remote location or a cloud.

The upper level control device 500 acquires a detection result obtained by the temperature detecting unit 14 from each of the plurality of ventilation apparatuses (S2201).

Based on the detection result, the upper level control device 500 identifies the number of exhaust units (of the second heat exchanger 12) including the second heat exchanger 12 that is frosted (S2202). For example, it may be determined that four exhaust units are frosted.

Then, the upper level control device 500 determines whether the detection result of the exhaust unit that is frosted is less than or equal to the first determination logic (S2203). The first determination logic is to determine, for example, whether the evaporation temperature t of the refrigerant flowing through the second heat exchanger 12 of the exhaust unit is lower than a predetermined value x1, or whether the pressure p of the refrigerant flowing through the second heat exchanger 12 of the exhaust unit is lower than a predetermined value y1. Further determination methods may be used as the determination logic. For example, as another example, it may be determined whether the surface temperature t2 of the second heat exchanger 12 is lower than a predetermined value z1, an imaging means may capture the surface of the second heat exchanger 12, calculate the matching degree between the captured image data and the normal image data, and determine whether the difference is greater than w%.

When the upper level control device 500 determines that the detection result is less than or equal to the first determination logic (S2203: Yes), the upper level control device 500 determines that the exhaust unit is at frosting level 1 (S2204).

On the other hand, when the upper level control device 500 determines that the detection result is greater than the first determination logic (S2203: No), the upper level control device 500 determines whether the detection result of the exhaust unit that is frosted is less than or equal to the second determination logic (S2205). The second determination logic is to determine, for example, whether the evaporation temperature t of the refrigerant flowing through the second heat exchanger 12 of the exhaust unit is less than a predetermined value x2 or whether the pressure p of the refrigerant flowing through the second heat exchanger 12 of the exhaust unit is less than a predetermined value y2. The predetermined value x1 < a predetermined value x2 and the predetermined value y1 < a predetermined value y2.

When the upper level control device 500 determines that the detection result is less than or equal to the second determination logic (S2205: Yes), the upper level control device determines that the exhaust unit is frosting level 2 (S2206).

On the other hand, when the upper level control device 500 determines that the detection result is greater than the first determination logic (S2205: No), the upper level control device determines that the exhaust unit is frosting level 3 (S2207).

Thereafter, the upper level control device 500 determines whether the frosting level has been set for all the exhaust units that are frosted (S2208). If it is determined that the frosting level has not been set for all of the exhaust units (S2208: No), processing is performed from S2203.

On the other hand, when it is determined that the frosting level has been set for all exhaust units that are frosted (S2208: YES), the upper level control device 500 calculates the time required for the frosting operation for each exhaust unit (S2209). Any method may be used for calculating the time required for the frosting operation including a well-known method. The time required for a frosting operation may be predetermined for each frosting level.

Further, the upper level control device 500 calculates an index of required comfort in the living room space based on the current status of the living room space (S2210). The current status of the living room space is, for example, the detection result of a sensor provided near the ventilation port of the living room space. The index of required comfort is the index of required comfort in the current living room space. The index of comfort is determined according to, for example, the required value of the temperature blowing out from the ventilation opening, the air volume required for ventilation, and the number of people present in the current living room space. The higher the index of comfort, the more comfortable the living room space needs to be maintained.

The upper level control device 500 determines whether the calculated index of required comfort is greater than the reference value k (S2211).

When it is determined that the calculated index of required comfort is greater than the reference value k (S2211: Yes), the upper level control device 500 makes a setting to sequentially perform a defrosting operation for the plurality of exhaust units (S2213). That is, the upper level control device 500 prevents simultaneous defrosting operations by the setting of sequentially performing defrosting operations to maintain the comfort of the living room space. The order of defrosting is set according to the defrosting level. For example, when there is one exhaust unit having the frosting level 1, two exhaust units having the frosting level 2, and one exhaust unit having the frosting level 3, defrosting is set to be performed in the order of one of the exhaust units having the frosting level 1, one of the exhaust units having the frosting level 2, the other one of the exhaust units having the frosting level 2, and the exhaust unit having the frosting level 3.

On the other hand, when the upper level control device 500 determines that the calculated index of required comfort is less than or equal to the reference value k (S2211: No), defrosting is set to be performed simultaneously for the plurality of exhaust units (S2212). That is, the upper level control device 500 ends the defrosting operations quickly by setting to perform simultaneous defrosting operations. Note that defrosting operations are not performed for all of the exhaust units. The order of the defrosting operations may be set according to the defrosting level. For example, when there is one exhaust unit having the frosting level 1, two exhaust units having the frosting level 2, and one exhaust unit having the frosting level 3, a setting is made to simultaneously perform the defrosting operation of the exhaust unit having the frosting level 1 and the exhaust unit having the frosting level 3, and then to simultaneously perform the defrosting operations of the two exhaust units having the frosting level 2. This setting allows for a balance between the load on the living room space and the end of the defrosting operation.

The upper level control device 500 outputs the defrosting operation instruction for each exhaust unit according to the setting (S2214).

Thus, the upper level control device 500 according to the present embodiment acquires the defrosted state of the second heat exchangers 12, generates a plurality of patterns for performing the defrosting operation of the plurality of second heat exchangers 12 when it is determined that the plurality of second heat exchangers 12 are defrosted while the plurality of second heat exchangers 12 function as evaporators, and performs defrosting control by using any one of the plurality of generated patterns based on the defrosted state of the plurality of second heat exchangers and the current status of the living room space.

In the present embodiment, the defrosting operation is performed sequentially according to the defrosting level of the exhaust unit. At that time, when comfort is required, comfort can be maintained by controlling such that the defrosting operations of a plurality of exhaust units are not performed simultaneously.

Further, when comfort is not important, temperature control of the plurality of ventilation apparatuses is stopped at the same time, and the defrosting operation is performed simultaneously by the exhaust unit of the plurality of ventilation apparatuses. Since temperature control is stopped, comfort is reduced, but the defrosting operation can be performed in a short period.

In the above-described embodiments and modified examples, an example in which the air supply unit is a casing (an example of the first casing) that houses the first heat exchanger 22 and at least a part of the air flow path (an example of the first air flow path), and the exhaust unit is a casing (an example of the second casing) that houses the second heat exchanger 12 and at least a part of the air flow path (an example of the second air flow path), and the casings are separated has been described.

Thus, the exhaust unit and the air supply unit can be arranged at different positions. Thus, the degree of freedom of the arrangement of the ventilation apparatus capable of recovering heat can be increased compared with the conventional ventilation apparatus.

However, the above-described embodiments and modified examples are not limited to the example where the casing of the air supply unit and the casing of the exhaust unit are separated, and the air supply unit and the exhaust unit may be integrated. That **is,** when the first heat exchanger 22 and the second heat exchanger 12 are connected by a refrigerant circuit, and a fan 21 corresponding to the first heat exchanger 22 and a fan corresponding to the second heat exchanger 12 are provided, the air volume adjustment and the temperature adjustment of the refrigerant can be applied as described in the above-described embodiments and modified examples. As described above, the method described in the above-described embodiments and modified examples may be applied when the air supply unit and the exhaust unit are integrated.

The above-described embodiments and modified examples describe the defrosting method. The method described in the above-described embodiments and modified examples is not limited to the use of the defrosting method alone, but may be used in combination with one or more defrosting methods described in other embodiments and modified examples.

Although the embodiments have been described above, it will be understood that various changes in form and details are possible without departing from the object and scope of the claims.

### Reference Signs List

1, 1B, 1C, 1D, 1E, 1F_1, 1F_2, 1F_3 ventilation apparatus
2, 2B, 2F air conditioner
10, 110A, 110B, 210, 310, 510A, 510B, 510C exhaust unit
11 fan
12 second heat exchanger
13, 113A, 113B, 213, 313, 413 control unit
14 temperature detecting unit
15 driving motor
16 electric valve
20, 120A, 120B, 220A, 220B, 520A, 520B, 520C air supply unit
21 fan
22 heat exchanger 1
23, 123 control unit
24 temperature detecting unit
25 driving motor
26 electric valve
240, 440 opening/closing damper
341 first opening/closing damper
342 second opening/closing damper
50, 150, 550A, 550B, 550C compressor unit
51 driving motor
52, 152 control unit
53 compressor
54 four-way valve
55 electric valve
156 bypass electric valve
70, 170, 571, 572, 573 outdoor unit
71, 171 control unit
81, 82, 581, 582, 583, 584, 585, 586, 587, 588 air-conditioning indoor unit
100, 500 upper level control device
161, 162 electric valve
F1, F2, F3, F4, F101, F102, F103, F104 refrigerant circuit
F106 bypass flow path
F5, F501, F502, F503 connection pipe
P1 air supply flow path
P2 return air flow path
P101 first air supply flow path
P102 second air supply flow path
P103 first exhaust flow path
P104 second exhaust flow path
P202 return air flow path
P202A first return air branch path
P202B second return air branch path
P402 bypass flow path
P403 return air flow path

## Claims

1. A ventilation (1, 1B, 1C, 1D, 1E, 1F_1, 1F_2, 1F_3) apparatus for a building comprising:
a compressor (53);
a first heat exchanger (22) configured to function as a condenser or an evaporator;
a first air flow path (P1) configured to supply air taken in from outdoors to an indoor space (R11, R12) of the building after passing through the first heat exchanger (22);
a second heat exchanger (12) configured to function as a condenser or an evaporator;
a second air flow path (P2, P202, P202A, P301, P302) configured to exhaust air taken in from the indoor space (R11, R12) to the outdoors after passing through the second heat exchanger (12);
a refrigerant circuit (F1, F2, F3, F4, F101, F102, F103, F104) through which a refrigerant flows, the refrigerant circuit being connected to the compressor (53), the first heat exchanger (22), and the second heat exchanger (12) by a refrigerant pipe; and
a control unit (52, 152) configured to guide a flow of air in the indoor space (R11, R12) to the second heat exchanger (12) when the second heat exchanger (12) is determined to be in a frosted state, to increase a temperature of the second heat exchanger (12), and configured to output a predetermined instruction to an actuator configured to control a state of the refrigerant in the refrigerant circuit (F1, F2, F3, F4, F101, F102, F103, F104) to increase a temperature of the refrigerant flowing into the second heat exchanger (12).

2. The ventilation apparatus according to claim 1, wherein
the refrigerant circuit (F1, F2, F3, F4, F101, F102, F103, F104) includes a second valve part (16) configured to adjust an opening degree of a flow path, the second valve part (16) being provided between the first heat exchanger (22) and the second heat exchanger (12), and
when the second heat exchanger (12) is determined to be in the frosted state while the second heat exchanger (12) is functioning as an evaporator, the control unit (52, 152) outputs the predetermined instruction for increasing the opening degree adjusted by the second valve part (16) as compared with before the second heat exchanger (12) is determined to be in the frosted state.

3. The ventilation apparatus according to claim 1, further comprising:
a third valve part (161, 162) provided downstream from the second valve part (16) in a flow of the refrigerant in the refrigerant circuit (F1, F2, F3, F4, F101, F102, F103, F104) while the second heat exchanger (12) is functioning as an evaporator, and
when the second heat exchanger (12) is determined to be in the frosted state while the second heat exchanger (12) is functioning as an evaporator, the control unit (52, 152) further outputs the predetermined instruction for decreasing the opening degree adjusted by the third valve part (161, 162) as compared with before the second heat exchanger (12) is determined to be in the frosted state.

4. The ventilation apparatus according to any one of claims 1 to 3, wherein
a plurality of the second heat exchangers (12) are provided,
the second air flow path (P2, P202, P202A, P301, P302) through which air taken in from the indoor space (R11, R12) is exhausted to the outdoors is provided for each of the second heat exchangers (12), and
the control unit (52, 152) adjusts an air volume of air flowing through the second air flow path (P2, P202, P202A, P301, P302) corresponding to the second heat exchanger (12) based on a status of each of the plurality of the second heat exchangers (12).

5. The ventilation apparatus according to claim 4, wherein when a degree of frosting of one of the plurality of the second heat exchangers (12) is greater than a degree of frosting of another one of the plurality of the second heat exchangers (12), the control unit (52, 152) implements control such that a first air volume of the second air flow path (P2, P202, P202A, P301, P302) corresponding to the one of the plurality of the second heat exchangers (12) is increased as compared with a second air volume of the second air flow path corresponding to the other one of the plurality of the second heat exchangers (12).

6. The ventilation apparatus according to claim 5, wherein when implementing control to increase the first air volume, the control unit (52, 152) implements control to decrease the second air volume as compared with before increasing the first air volume.

7. The ventilation apparatus according to any one of claims 1 to 3, further comprising:
a switching mechanism (341, 342) configured to switch between whether to supply air from the indoor space (R11, R12) or to supply air from the outdoors as air flowing through the second air flow path, and
the control unit (52, 152) controls the switching mechanism (341, 342) to supply air starting from air having a higher detected temperature between the air from the indoor space (R11, R12) and the air from the outdoors.

8. The ventilation apparatus according to claim 1, wherein when the second heat exchanger (12) is determined to be in the frosted state, the control unit (52, 152) further transmits, to an air conditioner (2), a signal indicating not to perform a defrosting operation.

9. The ventilation apparatus according to claim 1, wherein when the second heat exchanger (12) is determined to be in the frosted state while the second heat exchanger (12) is functioning as an evaporator, the control unit (52, 152) outputs the predetermined instruction and switches a flow of air in the first air flow path (P1) to be exhausted to the outdoors from the indoor space (R11, R12).

10. The ventilation apparatus according to claim 9, wherein when the second heat exchanger (12) is determined to be in the frosted state while the second heat exchanger (12) is functioning as an evaporator, the control unit (52, 152) further switches a flow of air in the second air flow path (P2, P202, P202A, P301, P302) to be supplied to the indoor space (R11, R12) from the outdoors.

11. The ventilation apparatus according to any one of claims 1 to 10, further comprising:
a first casing configured to house the first heat exchanger and at least a part of the first air flow path (P1); and
a second casing configured to house the second heat exchanger and at least a part of the second air flow path (P2, P202, P202A, P301, P302), wherein
the first casing and the second casing are separable.

## Patentansprüche

1. Belüftungsvorrichtung (1, 1B, 1C, 1D, 1E, 1F_1, 1F_2, 1F_3) für ein Gebäude, umfassend:
einen Verdichter (53);
einen ersten Wärmetauscher (22), der ausgebildet ist, als ein Verflüssiger oder ein Verdampfer zu fungieren;
einen ersten Luftströmungsweg (P1), der ausgebildet ist, aus dem Außenbereich angesaugte Luft, nachdem sie den ersten Wärmetauscher (22) durchlaufen hat, dem Innenraum (R11, R12) des Gebäudes als Zuluft zuzuführen;
einen zweiten Wärmetauscher (12), der ausgebildet ist, als ein Verflüssiger oder ein Verdampfer zu fungieren;
einen zweiten Luftströmungsweg (P2, P202, P202A, P301, P302), der ausgebildet ist, aus dem Innenraum (R11, R12) angesaugte Luft, nachdem sie den zweiten Wärmetauscher (12) durchlaufen hat, als Abluft in den Außenbereich abzuführen;
einen Kältemittelkreislauf (F1, F2, F3, F4, F101, F102, F103, F104), durch den ein Kältemittel fließt, wobei der Kältemittelkreislauf über eine Kältemittelleitung mit dem Verdichter (53), dem ersten Wärmetauscher (22) und dem zweiten Wärmetauscher (12) verbunden ist; und
eine Steuereinheit (52, 152), die ausgebildet ist, einen Luftstrom in dem Innenraum (R11, R12) zu dem zweiten Wärmetauscher (12) zu leiten, wenn bestimmt wird, dass der zweite Wärmetauscher (12) sich in einem Vereisungszustand befindet, um eine Temperatur des zweiten Wärmetauschers (12) zu erhöhen, und die ausgebildet ist, eine vorbestimmte Anweisung an einen Aktuator auszugeben, der ausgebildet ist, einen Zustand des Kältemittels in dem Kältemittelkreislauf (F1, F2, F3, F4, F101, F102, F103, F104) zu steuern, um eine Temperatur des in den zweiten Wärmetauscher (12) strömenden Kältemittels zu erhöhen.

2. Belüftungsvorrichtung nach Anspruch 1, wobei
der Kältemittelkreislauf (F1, F2, F3, F4, F101, F102, F103, F104) ein zweites Ventilteil (16) einschließt, das ausgebildet ist, einen Öffnungsgrad eines Strömungswegs einzustellen und zwischen dem ersten Wärmetauscher (22) und dem zweiten Wärmetauscher (12) bereitgestellt ist, und
wenn bestimmt wird, dass der zweite Wärmetauscher (12) sich in dem Vereisungszustand befindet, während der zweite Wärmetauscher (12) als ein Verdampfer fungiert, die Steuereinheit (52, 152) die vorbestimmte Anweisung zum Erhöhen des von dem zweiten Ventilteil (16) eingestellten Öffnungsgrads im Vergleich zu vor dem Zeitpunkt, zu dem bestimmt wird, dass der zweite Wärmetauscher (12) sich in dem Vereisungszustand befindet, ausgibt.

3. Belüftungsvorrichtung nach Anspruch 1, weiter umfassend:
ein drittes Ventilteil (161, 162), das stromabwärts von dem zweiten Ventilteil (16) in einer Strömung des Kältemittels in dem Kältemittelkreislauf (F1, F2, F3, F4, F101, F102, F103, F104) bereitgestellt ist, während der zweite Wärmetauscher (12) als ein Verdampfer fungiert, und
wenn bestimmt wird, dass der zweite Wärmetauscher (12) sich in dem Vereisungszustand befindet, während der zweite Wärmetauscher (12) als ein Verdampfer fungiert, die Steuereinheit (52, 152) weiter die vorbestimmte Anweisung zum Verringern des von dem dritten Ventilteil (161, 162) eingestellten Öffnungsgrads im Vergleich zu vor dem Zeitpunkt, zu dem bestimmt wird, dass der zweite Wärmetauscher (12) sich in dem Vereisungszustand befindet, ausgibt.

4. Belüftungsvorrichtung nach einem der Ansprüche 1 bis 3, wobei
eine Vielzahl der zweiten Wärmetauscher (12) bereitgestellt ist,
der zweite Luftströmungsweg (P2, P202, P202A, P301, P302), durch den aus dem Innenraum (R11, R12) angesaugte Luft als Abluft in den Außenbereich abgeführt wird, für jeden der zweiten Wärmetauscher (12) bereitgestellt ist, und
die Steuereinheit (52, 152) eine Luftmenge von Luft, die durch den dem zweiten Wärmetauscher (12) entsprechenden zweiten Luftströmungsweg (P2, P202, P202A, P301, P302) strömt, basierend auf einem Status jedes der Vielzahl der zweiten Wärmetauscher (12) einstellt.

5. Belüftungsvorrichtung nach Anspruch 4, wobei, wenn ein Vereisungsgrad eines der Vielzahl der zweiten Wärmetauscher (12) größer ist als ein Vereisungsgrad eines anderen der Vielzahl der zweiten Wärmetauscher (12),
die Steuereinheit (52, 152) eine Steuerung derart ausführt, dass eine erste Luftmenge des dem einen der Vielzahl der zweiten Wärmetauscher (12) entsprechenden zweiten Luftströmungswegs (P2, P202, P202A, P301, P302) im Vergleich zu einer zweiten Luftmenge des dem anderen der Vielzahl der zweiten Wärmetauscher (12) entsprechenden zweiten Luftströmungswegs erhöht wird.

6. Belüftungsvorrichtung nach Anspruch 5, wobei, wenn eine Steuerung zum Erhöhen der ersten Luftmenge ausgeführt wird, die Steuereinheit (52, 152) eine Steuerung zum Verringern der zweiten Luftmenge im Vergleich zu vor dem Erhöhen der ersten Luftmenge ausführt.

7. Belüftungsvorrichtung nach einem der Ansprüche 1 bis 3, weiter umfassend:
einen Schaltmechanismus (341, 342), der ausgebildet ist, zwischen dem Zuführen von Luft aus dem Innenraum (R11, R12) als Luft, die durch den zweiten Luftströmungsweg strömt, und dem Zuführen von Luft aus dem Außenbereich als Luft, die durch den zweiten Luftströmungsweg strömt, umzuschalten, und
die Steuereinheit (52, 152) steuert den Schaltmechanismus (341, 342) zum Zuführen von Luft, ausgehend von der Luft, die zwischen der Luft aus dem Innenraum (R11, R12) und der Luft aus dem Außenbereich die höhere detektierte Temperatur aufweist.

8. Belüftungsvorrichtung nach Anspruch 1, wobei, wenn bestimmt wird, dass der zweite Wärmetauscher (12) sich in dem Vereisungszustand befindet, die Steuereinheit (52, 152) weiter an eine Klimaanlage (2) ein Signal übermittelt, das anzeigt, keinen Abtauvorgang durchzuführen.

9. Belüftungsvorrichtung nach Anspruch 1, wobei, wenn bestimmt wird, dass der zweite Wärmetauscher (12) sich in dem Vereisungszustand befindet, während der zweite Wärmetauscher (12) als ein Verdampfer fungiert, die Steuereinheit (52, 152) die vorbestimmte Anweisung ausgibt und einen Luftstrom in dem ersten Luftströmungsweg (P1) umschaltet, um als Abluft aus dem Innenraum (R11, R12) in den Außenbereich abgeführt zu werden.

10. Belüftungsvorrichtung nach Anspruch 9, wobei, wenn bestimmt wird, dass der zweite Wärmetauscher (12) sich in dem Vereisungszustand befindet, während der zweite Wärmetauscher (12) als ein Verdampfer fungiert, die Steuereinheit (52, 152) weiter einen Luftstrom in dem zweiten Luftströmungsweg (P2, P202, P202A, P301, P302) umschaltet, um dem Innenraum (R11, R12) aus dem Außenbereich zugeführt zu werden.

11. Belüftungsvorrichtung nach einem der Ansprüche 1 bis 10, weiter umfassend:
ein erstes Gehäuse, das ausgebildet ist, den ersten Wärmetauscher und mindestens einen Teil des ersten Luftströmungswegs (P1) aufzunehmen; und
ein zweites Gehäuse, das ausgebildet ist, den zweiten Wärmetauscher und mindestens einen Teil des zweiten Luftströmungswegs (P2, P202, P202A, P301, P302) aufzunehmen, wobei
das erste Gehäuse und das zweite Gehäuse trennbar sind.

## Revendications

1. Appareil de ventilation (1, 1B, 1C, 1D, 1E, 1F_1, 1F_2, 1F_3) destiné à un bâtiment comprenant :
un compresseur (53) ;
un premier échangeur de chaleur (22) configuré pour fonctionner en tant que condenseur ou évaporateur ;
un premier trajet d'écoulement d'air (P1) configuré pour apporter l'air aspiré depuis l'extérieur à un espace intérieur (R11, R12) du bâtiment après avoir traversé le premier échangeur de chaleur (22) ;
un second échangeur de chaleur (12) configuré pour fonctionner en tant que condenseur ou évaporateur ;
un second trajet d'écoulement d'air (P2, P202, P202A, P301, P302) configuré pour évacuer vers l'extérieur l'air aspiré depuis l'espace intérieur (R11, R12) après avoir traversé le second échangeur de chaleur (12) ;
un circuit (F1, F2, F3, F4, F101, F102, F103, F104) de fluide frigorigène dans lequel s'écoule un fluide frigorigène, le circuit de fluide frigorigène étant raccordé au compresseur (53), au premier échangeur de chaleur (22) et au second échangeur de chaleur (12) par un conduit de fluide frigorigène ; et
une unité de commande (52, 152) configurée pour guider un écoulement d'air dans l'espace intérieur (R11, R12) vers le second échangeur de chaleur (12) lorsque le second échangeur de chaleur (12) est déterminé comme étant dans un état givré, pour augmenter une température du second échangeur de chaleur (12), et configurée pour délivrer en sortie une instruction prédéterminée à un actionneur configuré pour commander un état du fluide frigorigène dans le circuit (F1, F2, F3, F4, F101, F102, F103, F104) de fluide frigorigène pour augmenter une température du fluide frigorigène s'écoulant dans le second échangeur de chaleur (12).

2. Appareil de ventilation selon la revendication 1, dans lequel
le circuit (F1, F2, F3, F4, F101, F102, F103, F104) de fluide frigorigène inclut une deuxième partie vanne (16) configurée pour régler un degré d'ouverture d'un trajet d'écoulement, la deuxième partie vanne (16) étant disposée entre le premier échangeur de chaleur (22) et le second échangeur de chaleur (12), et
lorsque le second échangeur de chaleur (12) est déterminé comme étant dans l'état givré tandis que le second échangeur de chaleur (12) fonctionne en tant qu'évaporateur, l'unité de commande (52, 152) délivre en sortie l'instruction prédéterminée visant à augmenter le degré d'ouverture réglé par la deuxième partie vanne (16) par rapport à avant que le second échangeur de chaleur (12) ne soit déterminé comme étant dans l'état givré.

3. Appareil de ventilation selon la revendication 1, comprenant en outre :
une troisième partie vanne (161, 162) disposée en aval de la deuxième partie vanne (16) dans un écoulement du fluide frigorigène dans le circuit (F1, F2, F3, F4, F101, F102, F103, F104) de fluide frigorigène tandis que le second échangeur de chaleur (12) fonctionne en tant qu'évaporateur, et
lorsque le second échangeur de chaleur (12) est déterminé comme étant dans l'état givré tandis que le second échangeur de chaleur (12) fonctionne en tant qu'évaporateur, l'unité de commande (52, 152) délivre en outre en sortie l'instruction prédéterminée visant à diminuer le degré d'ouverture réglé par la troisième partie vanne (161, 162) par rapport à avant que le second échangeur de chaleur (12) ne soit déterminé comme étant dans l'état givré.

4. Appareil de ventilation selon l'une quelconque des revendications 1 à 3, dans lequel
une pluralité de seconds échangeurs de chaleur (12) sont prévus,
le second trajet d'écoulement d'air (P2, P202, P202A, P301, P302) par lequel l'air aspiré depuis l'espace intérieur (R11, R12) est évacué vers l'extérieur est prévu pour chacun des seconds échangeurs de chaleur (12), et
l'unité de commande (52, 152) règle un volume d'air de l'air s'écoulant dans le second trajet d'écoulement d'air (P2, P202, P202A, P301, P302) correspondant au second échangeur de chaleur (12) sur la base d'un état de chacun de la pluralité de seconds échangeurs de chaleur (12).

5. Appareil de ventilation selon la revendication 4, dans lequel lorsqu'un degré de givrage de l'un de la pluralité de seconds échangeurs de chaleur (12) est supérieur à un degré de givrage d'un autre de la pluralité de seconds échangeurs de chaleur (12), l'unité de commande (52, 152) met en œuvre une commande telle qu'un premier volume d'air du second trajet d'écoulement d'air (P2, P202, P202A, P301, P302) correspondant à l'un de la pluralité de seconds échangeurs de chaleur (12) est augmenté par rapport à un second volume d'air du second trajet d'écoulement d'air correspondant à l'autre de la pluralité de seconds échangeurs de chaleur (12).

6. Appareil de ventilation selon la revendication 5, dans lequel, lors de la mise en œuvre de la commande visant à augmenter le premier volume d'air, l'unité de commande (52, 152) met en œuvre une commande visant à diminuer le second volume d'air par rapport à avant l'augmentation du premier volume d'air.

7. Appareil de ventilation selon l'une quelconque des revendications 1 à 3, comprenant en outre :
un mécanisme de commutation (341, 342) configuré pour commuter entre le fait d'apporter de l'air depuis l'espace intérieur (R11, R12) ou le fait d'apporter de l'air depuis l'extérieur en tant qu'air s'écoulant dans le second trajet d'écoulement d'air, et
l'unité de commande (52, 152) commande le mécanisme de commutation (341, 342) pour apporter de l'air à partir de l'air présentant une température détectée plus élevée entre l'air provenant de l'espace intérieur (R11, R12) et l'air provenant de l'extérieur.

8. Appareil de ventilation selon la revendication 1, dans lequel lorsque le second échangeur de chaleur (12) est déterminé comme étant dans l'état givré, l'unité de commande (52, 152) transmet en outre, à un climatiseur (2), un signal indiquant de ne pas mettre en œuvre une opération de dégivrage.

9. Appareil de ventilation selon la revendication 1, dans lequel lorsque le second échangeur de chaleur (12) est déterminé comme étant dans l'état givré tandis que le second échangeur de chaleur (12) fonctionne en tant qu'évaporateur, l'unité de commande (52, 152) délivre en sortie l'instruction prédéterminée et commute un écoulement d'air dans le premier trajet d'écoulement d'air (P1) devant être évacué vers l'extérieur depuis l'espace intérieur (R11, R12).

10. Appareil de ventilation selon la revendication 9, dans lequel lorsque le second échangeur de chaleur (12) est déterminé comme étant dans l'état givré tandis que le second échangeur de chaleur (12) fonctionne en tant qu'évaporateur, l'unité de commande (52, 152) commute en outre un écoulement d'air dans le second trajet d'écoulement d'air (P2, P202, P202A, P301, P302) devant être apporté à l'espace intérieur (R11, R12) depuis l'extérieur.

11. Appareil de ventilation selon l'une quelconque des revendications 1 à 10, comprenant en outre :
un premier boîtier configuré pour loger le premier échangeur de chaleur et au moins une partie du premier trajet d'écoulement d'air (P1) ; et
un second boîtier configuré pour loger le second échangeur de chaleur et au moins une partie du second trajet d'écoulement d'air (P2, P202, P202A, P301, P302), dans lequel
le premier boîtier et le second boîtier sont séparables.
